# EUROPEAN PATENT APPLICATION

(11) **EP 4 471 466 A1**
(43) Date of publication of application: **04.12.2024**
(21) Application number: 23305859.3
(22) Date of filing: 31.05.2023
(51) Int. Cl.: G02B 1/14, G02B 5/08

(54) **OPTICAL ARTICLE HAVING A REFLECTIVE BEHAVIOUR ONTO ITS FRONT MAIN SURFACE WITH HIGH ABRASION-RESISTANCE**

(71) Applicant: Essilor International, 94220 Charenton-Le-Pont (FR)
(72) Inventor: BURON, Teddy, 94430 CHENNEVIERES SUR MARNE (FR); MARCK, Christelle, 92130 ISSY LES MOULINEAUX (FR); ALBUQUERQUE DA SILVA, José, 94430 CHENNEVIERES SUR MARNE (FR); EMPRIN, Benoit, 75012 PARIS (FR); THEVENET, Yannick, 94440 Villecresnes (FR)
(74) Representative: Jacobacci Coralis Harle

(57) **Abstract**

The invention relates to an optical article (OA) having a front main face and a rear main face, comprising at least:
- one base element having a front main surface and a rear main surface;

at least one front interferential coating deposited to the front main surface of the base element, said front interferential coating comprising at least one layer having a low refractive index which is lower than 1.55, defined as "LI layer", and at least one layer having a high refractive index which is equal to or higher than 1.55, defined as "HI layer",
characterized in that an external abrasion-resistant coating is coated directly onto said front interferential coating so that the front interferential coating is positioned between the base element and the external abrasion-resistant coating, said external abrasion-resistant coating having a physical thickness ranging from 1 µm to 5 µm; and
wherein the optical article has, on its front main face, a mean light reflection factor in the visible region Rv _{(front face OA)} that is higher than or equal to 5 % for an angle of incidence of 15°.

## Description

### TECHNICAL FIELD OF THE INVENTION

The invention relates to an optical article comprising a substrate coated with a multilayer transparent coating that is reflective in the visible range, having an improved abrasion resistance and a method of designing such optical article. The optical article may especially be an ophthalmic lens, in particular a spectacle lens, such as sunglass lenses.

### BACKGROUND INFORMATION AND PRIOR ART

It is a common practice in the art to coat at least one main surface of an optical substrate with several coatings for imparting to the finished article additional or improved optical, physico-chemical and/or mechanical properties. These coatings are designated in general as functional coatings.

The various coatings that may be used to impart a plurality of mechanical, physico-chemical and/or optical properties may be impact-resistant coating layers, abrasion- and/or scratch-resistant coating layers, anti-reflection and/or reflective coating layers, anti-fouling layers and/or anti-fog layers.

Reflective coatings usually consist of interferential thin layers, which layers can be mineral oxides layers coated under vacuum for example, that are designed so as to confer to the surface of an optical article they coat, a mean light reflection factor in the visible region Rv (front face OA) that is higher than or equal to 5 % for an angle of incidence of 15°. Reflective coatings are generally applied to a surface of an optical article so as to provide a reduction in transmitted visible, ultra-violet or infrared light (i.e.: increase the light ray reflection). They may also impart a mirror and/or colored appearance to the optical article, which may be desirable for aesthetic purposes. Such a coating is used for example to provide solar spectacle lenses with a mirror effect.

Yet, resistance to abrasion and/or scratch of these reflective coatings is usually not sufficient, which is critical for solar lenses having a reflective (i.e.: mirror) front face, as compared to classical non-solar or antireflective lenses.

There are two kinds of scratches: "fine" scratches and "large" scratches. "Fine" scratches result from abrasion by rubbing of small particles on both sides of the optical substrate. These are, for example, scratches caused by wiping or by small objects pressed relatively lightly against the surfaces of the optical article. They tend to increase the diffusion of light from the substrate surfaces and create the perception of diffuse blur. "Large" scratches are caused by the rubbing of large particles or are the result from aggressions on various objects (i.e.: objects pressed heavily against the surfaces of the optical article). These are real surface bursts that act optically as the striations of a network by diffracting light. They result for the spectacles wearer by the perception of a marked blur located at the scratch site and are both visible and uncomfortable.

Indeed, the presence of scratches on the reflective front face of a solar lens is particularly perceptible for a wearer or an observer due to the color and brightness contrast between the light reflected from the scratches and the light reflected from the undamaged surface of the coating. A wearer may undergo a reduction in the quality of the vision, while an observer may find the scratched solar lenses aesthetically less appealing. This is particularly the case for reflective lenses displaying a mirror effect.

Moreover, when spectacles containing such scratches on the reflective front face of a solar lens, are used outside under the natural light, they could result by the transmission to the wearer's eyes of potentially harmful light (ex: ultra-violet or infrared light).

Furthermore, mirrored solar lenses are more often confronted with external aggression while worn during outside activities and sport, therefore combining high risk to be scratched and increased visibility of any resulting scratches.

Different ways to improve the abrasion resistance of an optical article, which is sensitive to scratches from environment, has been proposed in the prior art.

To increase the resistance to scratch of the interferential coating, known methods involve acting on the layers underneath the interferential stack.

Indeed, a common way to improve the abrasion resistance of an optical article, in particular a spectacle lens, is to provide an internal hard-coat layer (also called abrasion-resistant coating), the internal hard-coat being interposed specifically between the optical substrate and an additional coating such as a multilayered interferential coating, i.e., an antireflective or mirror coating.

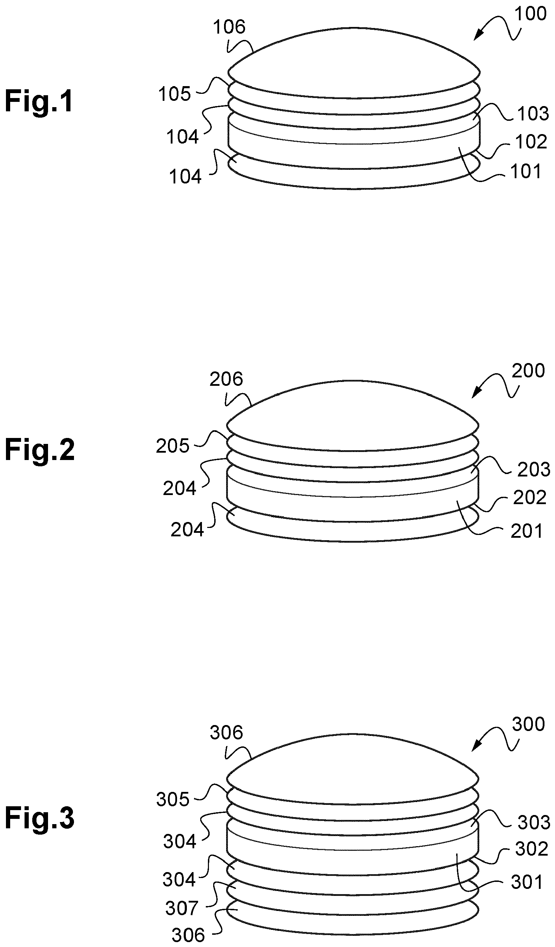

As mentioned above, the position of the internal abrasion-resistant coating is not arbitrary, and it is sandwiched between the optical substrate and the multilayered interferential coating. This solution is for instance illustrated on Fig.1. On this Fig.1, a traditional optical article 100 is depicted. This optical article 100 comprises a transparent or colored substrate 101, made generally of organic glass comprising two main faces, a rear face 102 (or the inner or Concave or CC) intended to be the face which, when using the article, is the nearest from the wearer's eye, and a front face 103 (or Convex or CX), intended to be the face which when using the article, is the most distant from the wearer's eye. Both the rear face 102 and the front face 103 are coated with an internal abrasion-resistant coating 104, optionally through a primer coating. In general, the internal abrasion-resistant coating 104 deposited onto the rear face 102 is identical to the internal abrasion-resistant coating 104 deposited onto the front face 103. Alternatively, these two internal abrasion-resistant coatings 104 may be different. Then, the abrasion-resistant coating 104, deposited on the front face 103 of the substrate, is successively coated with a front reflective or anti-reflective coating 105, and a front hydrophobic and/or oleophobic coating 106, so the qualification of "internal" abrasion-resistant coating. Alternatively, the abrasion-resistant coating 104 deposited on the rear face 102 of the substrate may be also successively coated with an anti-reflective coating 105 and a hydrophobic and/or oleophobic coating 106, so the same qualification of "internal" abrasion-resistant coating. In general, these internal abrasion-resistant coating has a physical thickness of about 2 µm to 4 µm.

It has been found that this structure and especially the position of the internal abrasion-resistant coating 104 interposed between the organic substrate 101 and the interferential coating is important. Indeed, the interferential coating consists generally of several thin layers of a purely mineral nature that are therefore very hard and brittle, whereas the organic substrate 101 has a soft nature. The function of the internal abrasion-resistant coating 104 is then to bridge the gap between the mechanical properties of the organic materials (i.e.: plastic-based materials) of the substrate and those of the mineral thin layers of the interferential coating by inserting between them an intermediate behaviour layer. Indeed, the internal abrasion-resistant coating 104 formed from a nanocomposite structure, so-called because it is composed of both organic and mineral materials and contains nanometric-sized mineral particles in inorganic matrix. It solves the problem of scratching thanks to its double property: resistance to fine scratches thanks to the hardness of their mineral component and resistance to large scratches thanks to the flexibility conferred by their organic component. Thus, the original structure of the internal abrasion-resistant coating, both organic and mineral in nature, ensures a mechanical transition - in some kind of "shock-absorbing" effect - between the interferential coating and the organic materials (i.e.: the plastic-based materials) of the optical substrate.

In addition, the interferential (especially antireflective coating) coating made of hard inorganic materials is expected to be resistant to fine scratches.

To further increase the resistance to scratch of the interferential coating, other known methods involve either acting on other layers underneath the interferential stack or underneath the internal hard-coating such as primer coatings, or, as exemplified below, acting intrinsically on the interferential coating layers for example by choosing specific arrangement and/or specific composition of the layers in the interferential coating that is less susceptible to be damaged.

US 8982466 relates to an optical lens having an internal hard coat and a multilayer anti-reflection coating in which the high-refractive-index layers, made of TiO₂, together have a thickness of less than 40 nm.

US 2008/002260 discloses an optical article having anti-reflection properties and high thermal resistance, comprising a substrate having at least one main face coated with a multilayer anti-reflection coating in which the ratio of physical thickness of low refractive index layers / high refractive index layers is generally higher than 2.1.

US 2008/206470 relates to a process for manufacturing an optical article having antireflection or reflective properties, comprising a sub-layer and a multilayer stack. In order to increase the abrasion resistance of the optical article, the sub-layer has to be deposited in a vacuum chamber with an additional gas supply during the deposition step, and the exposed surface of the sub-layer has to be submitted to an ionic bombardment treatment prior to depositing the multilayer stack.

WO 2018/192998 suggests the control of the thicknesses of the layers in an interferential coating in order to increase abrasion resistance of an optical article, i.e., the use of a ratio of physical thickness of external low refractive index layer(s) / external high refractive index layer(s) higher than or equal to 2.

WO 2018/033687 relates to an ophthalmic lens for sunglasses comprising a substrate having a front main face covered with a multilayer inorganic reflective coating in the visible spectrum, consisting of a stack comprising at least two low-refractive-index layers alternating with at least one high-refractive-index layer of specific thicknesses and deposited through specific processes, said coating having a thickness of less than or equal to 600 nm and a Bayer ISTM abrasion-resistance value higher than 10. When the reflective coating is a 3-layer coating, its thickness is relatively weak (< 300 nm) and its layer that is the closest to the substrate is a low refractive index layer having a thickness of 120-170 nm. When the reflective coating has 4 layers or more, its penultimate low refractive index layer has a low thickness, ranging from 40 to 80 nm.

WO 2020/127564 relates to an optical article including a reflective coating that has a particular structure responding to specific design rules developed by the applicant so as to optimize the abrasion and/or scratch resistance of the optical article.

Hence, an object of the current invention is thus to propose a new optical article which avoids, at least in part, the aforementioned drawbacks and especially improves the abrasion and/or scratch resistance of an optical article coated with a front interferential coating and exhibiting from its front surface, a mirror behaviour.

In particular, an object of the current invention is to provide a novel optical article a surface of which having a mirror behaviour that has improved abrasion resistance properties, such as improved mechanical crazing properties.

### SUMMARY OF THE INVENTION

The Applicant sought to develop a new optical article a transparent optical article having a mirror behavior from at least one face, comprising an organic or mineral glass substrate bearing an interferential coating, preferably a lens, and more preferably an ophthalmic lens for eyeglasses, said interferential coating having an improved abrasion and/or scratch resistance for instance as compared to already known interferential coated optical articles, a good adhesion to the substrate and preferably also a good resistance to heat and temperature variations.

In addition, it is preferable that these properties are obtained without decreasing the optical performances and other mechanical performances of said article, such as reflection performance (Rv).

For that purpose, the Applicant developed a new and atypical structure for optical articles comprising an interferential coating.

The invention relates therefore to optical article (OA) having a front main face and a rear main face, comprising at least:
- one base element having a front main surface and a rear main surface;
- at least one front interferential coating deposited to the front main surface of the base element, said front interferential coating comprising at least one layer having a low refractive index which is lower than 1.55, defined as "LI layer", and at least one layer having a high refractive index which is equal to or higher than 1.55, defined as "HI layer",

characterized in that an external abrasion-resistant coating is coated directly onto said front interferential coating so that the front interferential coating is positioned between the base element and the external abrasion-resistant coating, said external abrasion-resistant coating having a physical thickness ranging from 1 µm to 5 µm; and
wherein the optical article has, on its front main face, a mean light reflection factor in the visible region Rv _{(front face OA)} that is higher than or equal to 5 % for an angle of incidence of 15°.

Thanks to its characteristics, the interferential coating onto which is deposited a thick external abrasion-resistant coating has a good abrasion resistance as well as a good resistance to heat and temperature variations. For some of the exemplified lenses, the abrasion and/or scratch resistance is very good (good results to the abrasion Tumble test and to the abrasion hand steel wool) and the critical temperature at 1 week is improved (90° to 100°C for comparative lens deprived from the external abrasion-resistant coating versus 110 to 120°C for the invention). Visibility of the abrasion and/or scratch is lower for the invention versus the original targeted lens.

Contrary to what a skilled person in the art could expect, the Applicant surprisingly discovered that it was possible to deposit a thick layer of an external abrasion-resistant coating on an interferential coating, while keeping the mirror behavior of the optical article and improving further the scratch/abrasion resistance and the thermal crazing of the optical article. Indeed, the external abrasion-resistance coating is formed from a curable composition, such as a curable nano-composite varnish and was expected due to the curing at high temperature, in general around 100°C during 3 hours, to damage the underneath interferential coating. This is certainly the reason why, to the knowledge of the Applicant, no one has thought of or developed such a stack wherein the outermost layer or the second last layer is made of a thick external hard coat and/or a thick external anti-scratch coating in order to improve abrasive properties of an optical article and this despite the fact that hard-coat layers are known since the 1970s. Indeed, the more the thickness of the hard coat, the more the risk of crazing occurs.

Moreover, a skilled person could not expect to increase the resistance to scratches, especially "large" scratches (as it will be shown in the experimental part).

The Applicant has also developed a new method for designing optical articles comprising an interferential coating that has improved abrasion-resistant properties, while respecting optical characteristics of a targeted optical article.

Thus, the invention also relates to a method of designing an optical article (OA), implemented by a computer program comprising an optical article design software, the method comprising the following steps:
(a) selecting an initial optical article design including at least: a base element having a front main surface and a rear main surface, a front interferential coating deposited to the front main surface of the base element, said front interferential coating having a predetermined number of LI layer(s) and HI layer(s) of predetermined thicknesses, made respectively from predetermined materials,
   the front interferential coating being coated directly with an external abrasion resistant coating having a predetermined thickness and refraction index, so that the front interferential coating is positioned between the base element and said external abrasion-resistant coating;
(b) amending the physical thicknesses of said layers composing said front interferential coating and/or amending the refraction index of the external abrasion resistant coating and/or the thickness of the external abrasion resistant coating, to obtain a final optical article design having, on its front main face, a predetermined mean light reflection factor in the visible region, predetermined Rv_{(front face OA design)}, that is higher than or equal to 5 % for an angle of incidence of 15°final design .

The invention also relates to a system for manufacturing an optical article (OA) comprising at least a front main face and a rear main face, said system comprising as constitutive components:
- at least one base element having at least a front main surface and a main rear surface, and
- at least one front interferential coating deposited to the front main surface of the base element, said front interferential coating comprising at least one layer having a low refractive index which is lower than 1.55, defined as "LI layer", and at least one layer having a high refractive index which is equal to or higher than 1.55, defined as "HI layer",
- an external abrasion-resistant coating coated directly onto said front interferential coating so that the front interferential coating is positioned between the base element and said external abrasion-resistant coating, said external abrasion-resistant coating having a predetermined physical thickness ranging from 1 µm to 5 µm;
the system comprising:
- a computer program comprising an optical design software adapted to:
   calculate the thicknesses of at least one LI layer and one HI layer of the front interferential coating, such as said optical article has, on its front main face, a mean light reflection factor in the visible region Rv _{(front face OA)} that is higher than or equal to 5 % for an angle of incidence of 15° taking into account the other constitutive components of the optical article;
- a coating unit to coat the base element and optionally one or several intermediate layers deposited to the front main surface and/or the rear main surface of the base element, such as a primer coating with an internal abrasion-resistant coating;
- a deposition unit for depositing onto the base element or, where appropriate, onto the one or several intermediate layers the at least one LI layer and one HI layer of the front interferential coating in the thicknesses calculated by the optical design software,
- a coating unit for coating the front interferential coating with the external abrasion-resistant coating in the predetermined physical thickness.

### BRIEF DESCRIPTION OF THE DRAWINGS

For a more complete understanding of the description provided herein and the advantages thereof, reference is now made to the brief descriptions below, taken in connection with the accompanying drawings and detailed description.
FIG.1 shows an embodiment of an optical article according to the prior art;
Fig.2 shows a first embodiment of an optical article according to the current invention;
Fig.3 shows a second embodiment of an optical article according to the current invention;

### DETAILED DESCRIPTION OF THE INVENTION

### A) Definitions

The terms "comprise" (and any grammatical variation thereof, such as "comprises" and "comprising"), "have" (and any grammatical variation thereof, such as "has" and "having"), "contain" (and any grammatical variation thereof, such as "contains" and "containing"), and "include" (and any grammatical variation thereof, such as "includes" and "including") are open-ended linking verbs. They are used to specify the presence of stated features, integers, steps or components or groups thereof, but do not preclude the presence or addition of one or more other features, integers, steps or components or groups thereof. As a result, a method, or a step in a method, that "comprises," "has," "contains," or "includes" one or more steps or elements possesses those one or more steps or elements, but is not limited to possessing only those one or more steps or elements.

Unless otherwise indicated, all numbers or expressions referring to quantities of ingredients, ranges, reaction conditions, etc. used herein are to be understood as modified in all instances by the term "about."

Also, unless otherwise indicated, the indication of an interval of values « from X to Y » or "between X to Y", according to the present invention, means as including the values of X and Y.

As used herein, "interferential coating" means a coating, generally composed of interferential thin layers and comprises at least one layer having a low refractive index which is lower than 1.55, defined as "LI layer", and at least one layer having a high refractive index which is equal to or higher than 1.55, defined as "HI layer.

According to the invention, the combination of "the base element + the interferential coating + the external abrasion-resistant layer + the optional other layers" enable to provide a mirror behaviour onto the front main surface of the optical article, that is to say the mean light reflection factor in the visible region Rᵥ onto the front main face of the optical article is equal to or higher than 5%.

Especially, a "mirror behaviour" enables to provide a reduction in transmitted visible, ultra-violet and/or infrared light. In other words, an optical article having on its front main face a mirror behaviour reflects at least a part of light arriving on said surface. Said mirror behaviour increases light reflection at the article/air interface over a determined portion of the spectrum. Reflection may be in the ultraviolet spectrum or in the visible spectrum or in the infrared spectrum.

We mean an ophthalmic article defined by, but not exclusive of corrective lenses, non-corrective lenses, contact lenses, intra-ocular lenses, magnifying lenses, protective lenses, and visors containing photochromic compounds within a coating, the lens material, a film, or any adjacent layer.

As used herein, "a base element" can consist in an optical, such as an ophthalmic, substrate or in a support film of optical quality to be fixed on an optical/ophthalmic substrate thanks to an adhesive such as a pressure-sensitive adhesive of optical quality (PSA layer) (i.e.: laminate).In the present application, when an optical lens comprises one or more coatings onto the surface thereof, the expression "to deposit a layer or a coating onto the article" is intended to mean that a layer or a coating is deposited onto the external (exposed) surface of the outer coating of the article, that is to say its coating that is the most distant from the substrate.

Unless otherwise indicated, a coating, that is said to be "on" a substrate/base element or deposited "onto" a substrate/base element" is defined as a coating, which (i) is positioned above the substrate/base element, (ii) is not necessarily in contact with the substrate/base element, that is to say one or more intermediate coatings may be arranged between the substrate/base element and the coating in question, and (iii) does not necessarily completely cover the substrate/base element.

In a preferred embodiment, the coating on a substrate or deposited onto a substrate is in direct contact with this substrate.

When "a layer 1 is lying under a layer 2", it is intended to mean that layer 2 is more distant from the substrate than layer 1.

By outermost layer of the interferential coating, it is meant the layer of the interferential coating (MC) coating which is the furthest from the substrate.

By innermost layer of the interferential coating, it is meant the layer of the interferential coating which is the closest to the substrate.

By inner layer of the interferential coating, it is meant any layer of the interferential coating except for the outermost layer of said interferential coating.

Also, unless stated otherwise, all thicknesses disclosed in the present application relate to physical thicknesses.

As used herein, a layer of the interferential coating is defined as having a thickness higher than or equal to 1 nm. Thus, any layer having a thickness lower than 1 nm will not be considered when counting the number of layers in the reflective coating. A sub-layer is also not considered when counting the number of layers of the interferential coating.

Unless otherwise specified, the refractive indexes referred to in the present application are expressed at 25 °C at a wavelength of 550 nm.

As used herein, the rear (or the inner or Concave or CC) face of the substrate is intended to mean the face which, when using the article, is the nearest from the wearer's eye. It is generally a concave face. On the contrary, the front face of the substrate (or Convex or CX), is the face which, when using the article, is the most distant from the wearer's eye. It is generally a convex face.

The interferential coating according to the invention may be formed on at least one of the main faces of a bare substrate, i.e., an uncoated substrate, and preferably at least on the front main face of the substrate already coated with one or more functional coatings, such as an anti-abrasion coating.

Also, as used herein, a "transparent substrate" is understood to be transparent, when the observation of an image through said substrate is perceived with no significant loss of contrast, that is, when the formation of an image through said substrate is obtained without adversely affecting the quality of the image.

The term cosmetic appearance means that there is no, or almost no, cosmetic defects over time evaluated visually in transmission and is preferably measured under an arc lamp.

The colorimetric coefficients of the optical article of the invention in the international colorimetric system CIE L*a*b* (1976) (such as the Chroma C* and the hue "h") are calculated between 380 and 780 nm, taking the standard illuminant D 65 and the observer into account (angle of 10°). The observer is a "standard observer" as defined in the international colorimetric system CIE L*a*b*. Indeed, in the CIE L*a*b* space, it is possible to express not only overall variations in color, but also in relation to one or more of the parameters L*, a* and b*. This can be used to define new parameters and to relate them to the attributes of the visual sensation. Clarity, related to luminosity, is directly represented by the value of L*. Chroma: C* = (a*² + b ² )^{1/2} defines the chromaticness. The angle of hue: h = tg-1 (b*/a*) (expressed in degrees); related to hue.

The optical characteristics comprise at least the mean light reflection factor in the visible region Rᵥ, also named the "luminous reflectance".

Herein, the "luminous reflectance" noted Rᵥ, is such as defined in the ISO 13666:1998 Standard, and measured in accordance with the ISO 8980-4, i.e., this is the weighted spectral reflection average over the whole visible spectrum between 380 and 780 nm. Rᵥ is usually measured for an angle of incidence lower than 17°, typically of 15°, but can be evaluated for any angle of incidence.

According to the invention, the optical and colorimetric measurements (in reflection) of the face coated with the interferential coating of the invention (convex/front face): reflection factors Rv, hue angle h, a*, b* and chroma C* in the international colorimetric CIE (L*, a*, b*) space were carried out with a spectrophotometer, taking into account the standard illuminant D65, and the standard observer 10° (for h and C*). They are provided for an angle of incidence of 15°.

According to the invention, the "angle of incidence (symbol θ)" is the angle formed by a ray light incident on an ophthalmic lens surface and a normal to the surface at the point of incidence. The ray light is for instance an illuminant light source, such as the standard illuminant D65 as defined in the international colorimetric CIE L*a*b* (1976). Generally, the angle of incidence changes from 0° (normal incidence) to 90° (grazing incidence). The usual range for angle of incidence is from 0° to 75° and is typically 15° for the present invention.

### B) Optical article according to the invention

As mentioned-above, the Applicant has developed a transparent optical article, especially an ophthalmic lens such as spectacle lens, comprising a base element, such as a substrate in mineral or organic glass comprising at least an interferential coating (MC), said transparent optical article having improved abrasion resistance and to do so without compromising not only the optical and color characteristics of the optical article, its cosmetic appearance, but also the economic and/or industrial feasibility of its manufacture.

The optical article is such as defined in the set of claims. By referring to Fig.2, the optical article according to the invention 200 may comprise a substrate 201 comprising a rear man face 202 and a front main face 203. The rear main face 202 and the front main face 203 of the substrate 201 may be coated with a standard internal abrasion-resistant coating 204, named hereafter HC2. Then, the front main face 203 is successively coated with an interferential coating 205 and the claimed external abrasion-resistant coating 206 (also named hereafter HC1).

In general, the external abrasion-resistant coating, HC1, is directly coated onto the interferential coating.

Fig.3 shows another embodiment of an optical article 300 according to the invention. This optical article 300 may comprise a substrate 301 comprising a rear man face 302 and a front main face 303. The rear main face 302 and the front main face 303 of the substrate 301 may be coated with a standard internal abrasion-resistant coating 304, named hereafter HC2. Then, as for the embodiment of Fig.2, the front main face 303 is successively coated with an interferential coating 305 and the claimed external abrasion-resistant coating 306 (also named hereafter HC1). In addition, the rear main face 302 is successively coated onto said standard internal abrasion-resistant coating 304 by a thin layer of SiO₂ and by the claimed external abrasion-resistant coating 306. Indeed, in some embodiment, some as to improve the adhesion, it is preferable to ass a thin layer of SiO2 307 between the internal and the external abrasion-resistant coatings 304 and 306.

### B.1 The substrate or tinted substrate

The optical article according to the present invention comprises a base element.

According to an embodiment, this base element can be a laminate, that is to say a support film of optical quality to be fixed on an optical/ophthalmic substrate thanks to an adhesive such as a pressure-sensitive adhesive of optical quality (PSA layer). Preferably, the support film is made of cellulose triacetate (TAC) and has a thickness of at least 40 microns, preferably a thickness in the range of 40 µm to 300 µm inclusive and preferably a thickness of 80 to 190 µm. Materials of the support film may be selected from the group of films made of cellulose triacetate (TAC), cellulose acetate butyrate (CAB), polycarbonate (PC), poly(ethylene terephthalate) (PET), poly(methylmethacrylate) (PMMA), urethane polymer (TPU), cyclo olefin copolymer (COC), polyester copoblock amide (like Pebax) and Polyimides.

According to another embodiment (described hereafter), the base element can consist in an ophthalmic substrate of atransparent optical article, such as a lens or lens blank, and more preferably an ophthalmic lens or lens blank.

Generally speaking, the interferential coating of the optical article according to the invention may be deposited onto any substrate, and preferably onto organic lens substrates, for example a thermoplastic or thermosetting plastic material.

Thermoplastic may be selected from, for instance: polyamides; polyimide; polysulfones; polycarbonates and copolymers thereof; poly(ethylene terephthalate) and polymethylmethacrylate (PMMA).

Thermoset materials may be selected from, for instance: cycloolefin copolymers such as ethylene/norbornene or ethylene/cyclopentadiene copolymers ; homo- and copolymers of allyl carbonates of linear or branched aliphatic or aromatic polyols, such as homopolymers of diethylene glycol bis(allyl carbonate) (CR 39^{®}) ; homo- and copolymers of (meth)acrylic acid and esters thereof, which may be derived from bisphenol A ; polymer and copolymer of thio(meth)acrylic acid and esters thereof, polymer and copolymer of allyl esters which may be derived from Bisphenol A or phthalic acids and allyl aromatics such as styrene, polymer and copolymer of urethane and thiourethane, polymer and copolymer of epoxy, and polymer and copolymer of sulphide, disulfide and episulfide, and combinations thereof.

As used herein, a (co)polymer is intended to mean a copolymer or a polymer. As used herein, a (meth)acrylate is intended to mean an acrylate or a methacrylate. As used herein, a polycarbonate (PC) is intended to mean either homopolycarbonates or copolycarbonates and block copolycarbonates.

Homopolymers of diethylene glycol bis(allyl carbonate) (CR 39^{®}), allylic and (meth)acrylic copolymers, having a refractive index between 1,54 and 1,58, polymer and copolymer of thiourethane, polycarbonates are preferred.

As it will be shown hereafter, the substrate may be coated with one or more functional coatings prior to depositing the interferential coating of the invention. These functional coatings traditionally used in optics may be, without limitation, an impact-resistant primer layer, an abrasion-resistant coating (that is different from the claimed external abrasion-resistant coating), a polarizing coating, a photochromic coating or a tinted coating. In the following a substrate means either a bare substrate or such a coated substrate.

According to an embodiment, the substrate that is suitable for the invention may be tinted or colored thanks to the use of an absorbing dye. According to the invention, "a colored substrate" means that the light transmitted through the substrate is not white, but colored, the substrate still being transparent, that is to say, the light from a white fluorescent source is reflected from the surface of the substrate to an observer such that the reflected light is colored.

As used herein, an absorbing dye may refer to both a pigment and a colorant, i.e., can be respectively insoluble or soluble in its vehicle.

Generally, the absorbing dye is incorporated directly into the substrate, and/or is incorporated in one coating deposited directly or indirectly at the surface of the substrate and this at a suitable concentration (i.e.: tinting coating).

For instance, several methods of adding an absorbing dye are usable including a method wherein prior to the polymerization of a plastic lens substrate, a pigment is formulated into a monomer material, a method of dyeing a plastic lens substrate. The dyeing method of a plastic lens substrate includes a method of directly dyeing a lens substrate, and a method wherein a dyeable hard coat film (varnish) is first formed on a surface of a lens substrate and then the hard coat film is dyed. Alternatively, the substrate may be coloured by dry-tinting step. The dry tinting step can for example comprise a tinting process by sublimation, such as the one developed by the company Nidek in JP2004-121434. Such dry-tinting step generally comprises a sub-step of sublimating a dye from a carrier medium so as to deposit it by condensation on the lens at a temperature of about 100 to 250°C. Subsequently, an imbibing sub-step is generally applied to enable the dye to migrate from the surface of the lens into the substrate. This imbibing sub-step takes place in an oven and often reaches temperatures of about 50°C to 150°C, generally above 80°C or above 90°C. The tinting step i) can provide a uniform tint or a gradient tint on the optical article.

In general, the rear main face of the substrate is colored by the dry-tinting step according to the above process.

Prior to depositing the interferential coating, the surfaces of the underlying layers can be submitted to specific treatments, so as to reinforce the adhesion of one layer to the next one. Such treatment can be a physical or chemical surface activating pre-treatment that is generally conducted under vacuum. It may be a bombardment with energetic and/or reactive species, for example with an ion beam ("Ion Pre-Cleaning" or "IPC") or with an electron beam, a corona discharge treatment, an ion spallation treatment, an ultraviolet treatment or a plasma-mediated treatment under vacuum, generally using an oxygen or an argon plasma. It may also be an acid or basic treatment and/or a solvent-based treatment (water, hydrogen peroxide or any organic solvent).

According to the invention, the substrate's surfaces on which the internal abrasion resistant coating HC2 is applied, are prepared with a basic treatment to improve the adhesion of the internal abrasion resistant coatings HC2 to the substrate.

The internal abrasion resistant layer HC2 on which the interferential coating will be applied is prepared with an ion beam ("Ion Pre-Cleaning" or "IPC") to improve the adhesion of the interferential coating.

The interferential coating's surface on which the external abrasion resistant coating HC1 will be applied, is prepared with a plasma-mediated treatment under vacuum, using an oxygen plasma, and then washed to avoid dust before the deposition of the abrasion resistant coating HC1.

### B.2 The interferential coating

As previously mentioned, the interferential coating according to the invention enables to improve the global performances of the optical article according to the invention.

In particular, the interferential coating has a high reflection in the visible region ranging from 380 nm to 780 nm at an angle of incidence of 15°. In particular, the interferential coating has a mean light reflection factor in the visible region Rᵥ that is higher than 5 %, preferably higher than or equal to 10% for an angle of incidence of 15°.

According to the invention, a mean light reflection factor in the visible region Rᵥ that is "higher than 5 %" includes the following values (in %) and/or any intervals comprised between these values (limits included): 5.0; 5.5; 6.0; 6.5; 7.0; 7.5; 8.0; 8.5; 9.0; 9.5; 10.0; 10.5; 11.0; 11.5; 12.0; 12.5; 13.0; 13.5; 14.0; 14.5; 15.0; 15.5; 16.0; 16.5; 17.0; 17.5; 18.0; 19.0; 20.0 ; etc.

The structure of the interferential coating according to the invention will be described hereafter.

The interferential coating of the invention comprises a stack of at least two made of dielectric materials having a high refractive index and a low refractive index.

According to the invention, the interferential coating comprises at least one layer, preferably two layers having a low refractive index which is lower than 1.55, defined as "LI layer", and at least one layer, preferably two layers having a high refractive index which is equal to or higher than 1.55, defined as "HI layer". It is here a simple stack, since the layer total number in the interferential coating is higher than or equal to 2 and in general lower than or equal to 14.

Indeed, according to a characteristic of the invention, the total number of HI and LI layers in the interferential coating is higher than or equal to 2, preferably higher than or equal to 4, and typically higher than or equal to 6.

According to another characteristic of the invention, the total number of alternating HI and LI layers in the interferential coating is lower than or equal to 13, preferably lower than or equal to 12, in particular lower than or equal to 11 and typically lower than or equal to 10.

According to yet another characteristic of the invention, the total number of alternating HI and LI layers in the interferential coating, preferably between four and ten layers.

HI layers and LI layers don't need to alternate with each other in the stack, although they also may, according to one embodiment of the invention. Two HI layers (or more) may be deposited onto each other, as well as two LI layers (or more) may be deposited onto each other.

In the present application, when two HI layers (or more) are deposited onto each other, they are not considered as being a single HI layer when counting the number of layers of the interferential stack. The same applies to stacks of two or more adjacent LI layers.

In general, the HI layers and LI layers alternate with each other in the stack of the interferential coating according to the invention.

Advantageously, the interferential coating comprises alternately HI layers and LI layers and has a number of layers higher than or equal to 4, preferably higher than or equal to 5 and especially higher than or equal to 6.

In the present application, a layer of the interferential coating is said to be a layer with a high refractive index (HI) when its refractive index is higher than 1.55, preferably higher than or equal to 1.6, even more preferably higher than or equal to 1.8 or 1.9 and most preferably higher than or equal to 2. Said HI layers preferably have a refractive index lower than or equal to 2.2 or 2.1.

Also, a layer of the interferential coating is said to be a low refractive index layer (LI) when its refractive index is lower than or equal to 1.55, preferably lower than or equal to 1.52, more preferably lower than or equal to 1.48 or 1.47. Said LI layer preferably has a refractive index higher than or equal to 1.1, more preferably higher than or equal to 1.3 or 1.35.

The HI layer generally comprises one or more metal oxides such as, without limitation, zirconia (Zr0₂), ZrO_{X} with x < 2, titanium dioxide (TiO₂), a substoichiometric titanium oxide such as Ti₃O₅, alumina (Al₂O₃), tantalum pentoxide (Ta₂O₅), neodymium oxide (Nd₂O₅), praseodymium oxide (PR₂O₃), praseodymium titanate (PrTiO₃), La₂O₃, Nb₂0s, Y₂O₃, preferably Zr0₂ and Ta₂0ₛ. In some aspects of the invention, the outermost high refractive index layer(s) of the interferential coating do(es) not comprise titanium oxide. In a preferred embodiment, the interferential coating does not comprise any layer comprising TiO₂, or more generally, titanium oxide. As used herein, titanium oxide is intended to mean titanium dioxide or a substoichiometric titanium oxide (TiOₓ, where x < 2). Titanium oxidecontaining layers are indeed sensitive to photo-degradation.

Optionally, the HI layers may further contain silica or other materials with a low refractive index, provided they have a refractive index higher than 1.55 as indicated hereabove. The preferred materials include TiO₂, TiaOs, ZrO₂ or ZrOₓ with x< 2 and mixtures thereof.

In one embodiment, at least one layer among all the HI layers and preferably all the HI layers composing the interferential coating are made of Ti₃O₅ or ZrO₂.

Preferably, the total thickness of all the HI layers included into the interferential coating is equal to or higher than 90 nm, preferably equal to or higher than 120 nm and in particular equal to or higher than 125 nm.

As used herein, an interval higher than or equal to 90 nm includes the following values and/or any intervals comprised between these values (limits included): 90; 95; 100; 105; 110; 115; 120; 125; 130; 135; 140; 145; 150; 155; 160; 165; 170; 175; 180; 185; 190; 195; 200; 205; 210; 220; 230; 240; 250; 260; 270; 280; 290; 300; 310; 320; 330; etc.

Generally, the interferential coating does preferably not comprise any HI layer having a thickness higher than or equal to 120 nm, especially higher than or equal to 110 nm and typically higher than or equal to 105 nm. According to this embodiment, each HI layer comprised into the interferential coating according to the invention has a physical thickness ranging from 5 to 120 nm, preferably from 8 to 110 nm, more preferably from 9 to 105 nm.

The LI layer is also well known and may comprise, without limitation, SiO₂, MgF₂, or a mixture of silica and alumina, especially silica doped with alumina, the latter contributing to increase the interferential coating thermal resistance. The LI layer is preferably a layer comprising at least 80 % by weight of silica, more preferably at least 90 % by weight of silica, relative to the layer total weight, and even more preferably consists in a silica layer.

Optionally, the LI layers may further contain materials with a high refractive index, provided the refractive index of the resulting layer is lower than or equal to 1.55.

When a LI layer comprising a mixture of SiO₂ and Al₂O₃ is used, it preferably comprises from 1 to 10%, more preferably from 1 to 8 % and even more preferably from 1 to 5 % by weight of Al₂O₃ relative to the SiO₂ + Al₂O₃ total weight in such layer.

For example, SiO₂ doped with 4 % Al₂O₃ by weight, or less, or SiO₂ doped with 8 % Al₂O₃ may be employed. SiO₂/Al₂O₃ mixtures, that are available on the market may be used, such as LIMA^{®} marketed by the Umicore Materials AG company (refractive index n = 1.48-1.50 at 550 nm), or L5^{®} marketed by the Merck KGaA company (refractive index n = 1.48 at 500 nm).

Optionally, the interferential coating has at least one LI layer comprising SiO₂, preferably the at least two LI and especially all of the LI layers of said interferential coating comprise SiO₂.

The interferential coating external layer, i.e. , its layer that is the furthest from the substrate (i.e.: named hereafter "outermost LI layer of the interferential coating") is generally a LI layer and typically a silica-based layer, comprising preferably at least 80 % by weight of silica, more preferably at least 90% by weight of silica (for example a silica layer doped with alumina), relative to the layer total weight, and even more preferably consists of a silica layer.

In general, this outermost LI layer of the interferential coating has a physically thickness higher than or equal to 50 nm, preferably higher than or equal to 60 nm and typically higher than or equal to 90 nm. In one embodiment, this outermost LI layer of the interferential coating has a physical thickness higher ranges from 80 nm to 150 nm, in particular ranges from 85 nm to 120 nm and typically ranges from 90 nm to 200 nm.

As used herein, an interval higher than or equal to 50 nm includes the following values and/or any intervals comprised between these values (limits included): 50; 55; 60; 65; 70; 75; 80; 85; 90; 95; 100; 105; 110; 115; 120; etc.

Preferably, the total thickness of all the LI layers included into the interferential coating is equal to or higher than 160 nm, preferably equal to or higher than 170 nm and in particular equal to or higher than 190 nm.

As used herein, an interval higher than or equal to 160 nm includes the following values and/or any intervals comprised between these values (limits included): 160; 165; 170; 175; 180; 185; 190; 195; 200; 205; 210; 220; 230; 240; 250; 260; 270; 280; 290; 300; 310; 320; 330; 340; 350; 360; 370; 380; 390; 400; etc.

In general, the interferential coating does preferably not comprise any LI layer having a thickness higher than 230 nm, especially higher than or equal to 220 nm and typically higher than or equal to 200 nm.

In particular, each LI layer comprised into the interferential coating according to the invention has a physical thickness ranging from 5 to 230 nm, preferably from 8 to 220 nm, more preferably from 9 to 210 nm.

According to a characteristic of the invention, the ratio "total thickness of the LI layers: total thickness of the HI layers" is higher than or equal to 1, preferably higher than or equal 1.1 and typically higher than or equal 1.5. Especially, the ratio "total thickness of the LI layers: total thickness of the HI layers" is lower than or equal to 3.5, preferably lower than or equal 3.4 and typically lower than or equal 3.5, such as lower than or equal 3.1.

For instance, the interferential coating comprises an alternation of LI layer and HI layer, wherein in particular all the LI layers comprise SiO₂ and all the HI layers comprise ZrO₂.

Preferably, the interferential coating total thickness is equal to or lower than 800 nm, preferably equal to or lower than 750 nm and in particular equal to or lower than 700 nm.

As used herein, an interval lower than or equal to 800 nm includes the following values and/or any intervals comprised between these values (limits included): 800; 780; 760; 750; 740; 720; 700; 680; 660; 650; 640; 620; 600; 580; 560; 550; 540; 520; 400; 380; 360; 350; 340; etc.

In general, the interferential coating total thickness ranges from 250 nm to 800 nm, preferable from 440 nm to 770 nm, in particular from 420 nm to 760 nm and typically from 400 to 770 nm.

The interferential coating according to the invention has colorimetric characteristics.

Especially, the interferential coating may have a residual reflected color (i.e.: the reflected tint of the interferential coating that may be perceived by an observer). It is possible to prepare interferential coatings without limitation as regards their hue angle h (0° to 360°).

For instance, the hue angle h measured in the CIE L*, a*, b* color system may be ranged:
- from 210° and 330°, thereby corresponding to "blue" and derivatives residual reflection colors, including a more "blue-purple" or even "purple" residual reflection color;
- from 331° to 60°, thereby corresponding to "red" and derivatives residual reflection colors, including "orange", "pink" or "pink gold" residual reflection color,
- from 61° and 105°, thereby corresponding to a "yellow" residual reflection color,
- from 106° and 209°, thereby corresponding to a "green" residual reflection color .In particular, the interferential coating generally has a Chroma C* measured in the CIE L*, a*, b* color system that has a high value. In general, the Chroma C* of colored reflected colors (blue, green, yellow, red and their derivatives) is higher than or equal to 12, preferably higher than 15, preferably higher than or equal to 20, in particular higher than or equal to 25 and typically higher than or equal to 30, such as higher than or equal to 40. On the contrary, the reflected light of the interferential will be perceived as "silver" (grey or neutral in color) when the chroma is low i.e. below or equal to 11, whatever the hue angle value.

For instance, according to a first embodiment (called blue embodiment), the interferential coating comprises at least, in the direction moving away from the substrate (from the substrate to the air) the following "general structure":
- L6 : one innermost HI layer having a physical thickness of from 40 nm to 110 nm, preferably from 50 nm to 80 nm; more preferably from 60 nm to 80 nm
- L5 : one innermost LI layer having a physical thickness of from 50 nm to 120 nm, preferably from 60 nm to 110 nm; more preferably from 70 nm to 120 nm, even more preferably from 80 nm to 110 nm
- L4 : one HI layer having a physical thickness of from 10 nm to 90 nm, preferably from 20 nm to 80 nm; more preferably from 10 nm to 50 nm, more preferably from 20 nm to 45 nm
- L3 : one penultimate LI layer having a physical thickness of from 60 nm to 110 nm, preferably from 70 nm to 100 nm; more preferably from 70 nm to 110 nm, even more preferably from 80 nm to 100 nm
- L2 : one penultimate HI layer having a physical thickness of from 4 nm to 90 nm, preferably from 10 nm to 80 nm; more preferably from 50 nm to 90 nm, even more preferably from 60 nm to 80 nm
- L1 : one outermost LI layer having a physical thickness of from 30 nm to 120 nm, preferably from 40 nm to 110 nm, more preferably from 80 nm to 120 nm, even more preferably from 90 nm to 110 nm.

According to another embodiment (called green embodiment), the interferential coating comprises at least, in the direction moving away from the substrate (from the substrate to the air) the following "general structure":
- L10 : one innermost HI layer having a physical thickness of from 4 nm to 120 nm, preferably from 10 nm to 110 nm;
- L9 : one innermost LI layer having a physical thickness of from 45 nm to 120 nm, preferably from 55 nm to 110 nm;
- L8 : one HI layer having a physical thickness of from 4 nm to 45nm, preferably from 8 nm to 35 nm;
- L7 : one LI layer having a physical thickness of from 15 nm to 110 nm, preferably from 25 nm to 100 nm;
- L6 : one HI layer having a physical thickness of from 4 nm to 45 nm, preferably from 5 nm to 35 nm;
- L5 : one LI layer having a physical thickness of from 4 nm to 110 nm, preferably from 15 nm to 100 nm
- L4 : one penultimate HI layer having a physical thickness of from 40 nm to 120 nm, preferably from 50 nm to 110 nm;
- L3 : one penultimate LI layer having a physical thickness of from 4 nm to 110 nm, preferably from 8 nm to 100 nm;
- L2: one outermost HI layer having a physical thickness of from 70 nm to 120 nm, preferably from 80 nm to 110 nm;
- L1: one outermost LI layer having a physical thickness of from 40 nm to 120 nm, preferably from 50 nm to 110 nm.

According to yet another embodiment (called Silver embodiment), the interferential coating comprises at least, in the direction moving away from the substrate (from the substrate to the air) the following "general structure":
- L8 : one HI layer having a physical thickness of from 20 nm to 60 nm, preferably from 30 nm to 50 nm;
- L7 : one LI layer having a physical thickness of from 25 nm to 85 nm, preferably from 45 nm to 65 nm;
- L6 : one HI layer having a physical thickness of from 30 nm to 70 nm, preferably from 40 nm to 60 nm;
- L5 : one LI layer having a physical thickness of from 80 nm to 130 nm, preferably from 90 nm to 110 nm
- L4 : one penultimate HI layer having a physical thickness of from 40 nm to 120 nm, preferably from 60 nm to 80 nm;
- L3 : one penultimate LI layer having a physical thickness of from 90 nm to 160 nm, preferably from 110 nm to 140 nm;
- L2: one outermost HI layer having a physical thickness of from 80 nm to 130 nm, preferably from 90 nm to 110 nm;
- L1: one outermost LI layer having a physical thickness of from 140 nm to 220 nm, preferably from 160 nm to 200 nm.

According to yet another embodiment (called Gold embodiment), the interferential coating comprises at least, in the direction moving away from the substrate (from the substrate to the air) the following "general structure":
- L8 : one HI layer having a physical thickness of from 30 nm to 70 nm, preferably from 40 nm to 60 nm;
- L7 : one LI layer having a physical thickness of from 90 nm to 160 nm, preferably from 100 nm to 130 nm;
- L6 : one HI layer having a physical thickness of from 30 nm to 70 nm, preferably from 40 nm to 60 nm;
- L5 : one LI layer having a physical thickness of from 4 nm to 30 nm, preferably from 4 nm to 20 nm;
- L4 : one penultimate HI layer having a physical thickness of from 4 nm to 30 nm, preferably from 4 nm to 20 nm;
- L3 : one penultimate LI layer having a physical thickness of from 90 nm to 160 nm, preferably from 110 nm to 140 nm;
- L2: one outermost HI layer having a physical thickness of from 80 nm to 130 nm, preferably from 90 nm to 110 nm;
- L1: one outermost LI layer having a physical thickness of from 80 nm to 130 nm, preferably from 90 nm to 110 nm.

According to yet another embodiment (called Purple embodiment), the interferential coating comprises at least, in the direction moving away from the substrate (from the substrate to the air) the following "general structure":
- L8 : one HI layer having a physical thickness of from 30 nm to 70 nm, preferably from 40 nm to 60 nm;
- L7 : one LI layer having a physical thickness of from 25 nm to 85 nm, preferably from 45 nm to 65 nm;
- L6 : one HI layer having a physical thickness of from 30 nm to 70 nm, preferably from 40 nm to 60 nm;
- L5 : one LI layer having a physical thickness of from 50 nm to 100 nm, preferably from 60 nm to 90 nm;
- L4 : one penultimate HI layer having a physical thickness of from 25 nm to 85 nm, preferably from 45 nm to 65 nm;
- L3 : one penultimate LI layer having a physical thickness of from 25 nm to 85 nm, preferably from 45 nm to 65 nm;
- L2: one outermost HI layer having a physical thickness of from 30 nm to 70 nm, preferably from 40 nm to 60 nm;
- L1: one outermost LI layer having a physical thickness of from 80 nm to 130 nm, preferably from 90 nm to 110 nm.

According to yet another embodiment (called Free embodiment), the interferential coating comprises at least, in the direction moving away from the substrate (from the substrate to the air) the following "general structure":
- L4: one HI layer having a physical thickness of from 80 nm to 130 nm, preferably from 90 nm to 110 nm;
- L3: one LI layer having a physical thickness of from 140 nm to 220 nm, preferably from 160 nm to 210 nm;
- L2: one outermost HI layer having a physical thickness of from 15 nm to 80 nm, preferably from 20 nm to 35 nm
- L1: one outermost LI layer having a physical thickness of from 140 nm to 220 nm, preferably from 160 nm to 210 nm.

According to yet another embodiment (called Orange embodiment), the interferential coating comprises at least, in the direction moving away from the substrate (from the substrate to the air) the following "general structure":
- L8 : one HI layer having a physical thickness of from 80 nm to 130 nm, preferably from 90 nm to 110 nm;
- L7 : one LI layer having a physical thickness of from 90 nm to 160 nm, preferably from 110 nm to 140 nm;
- L6 : one HI layer having a physical thickness of from 4 nm to 30 nm, preferably from 4 nm to 20 nm;
- L5 : one LI layer having a physical thickness of from 4 nm to 30 nm, preferably from 4 nm to 20 nm
- L4 : one penultimate HI layer having a physical thickness of from 40 nm to 120 nm, preferably from 60 nm to 80 nm;
- L3 : one penultimate LI layer having a physical thickness of from 90 nm to 160 nm, preferably from 110 nm to 140 nm;
- L2: one outermost HI layer having a physical thickness of from 80 nm to 130 nm, preferably from 90 nm to 110 nm;
- L1: one outermost LI layer having a physical thickness of from 140 nm to 220 nm, preferably from 160 nm to 210 nm.

Generally, the Applicant has discovered that the optical article according to the invention has improved resistance to heat and temperature variations, i.e., a high critical temperature Tc even after a long time. According to the invention, the temperature from which cracks are beginning to be observed in an article or coating is called the critical temperature (T_{c}).

Especially, the optical article has a critical temperature Tc equal to or higher than 80°C, preferably equal to or higher than 85°C, more preferably equal to or higher than 90°C, especially equal to or higher than 93°C and typically equal to or higher than 100°C.

As used herein, a "critical temperature Tc equal to or higher than 80°C" includes the followings values and any intervals among them: 80; 81 ; 82; 83; 84; 85; 86; 87; 88; 89; 90; 91 ; 92; 93; 94; 95; 96; 97; 98; 99; 100; 101 ; 102; 103; 104; 105; 106; 107; 108; 109; 110; 1 11 ; 1 12; 1 13; 114; 115; 116; 1 17; 1 18; 1 19; 120; 121 ; 122; 123; 124; 125; etc.

In addition, the interferential coating is in general directly coated with the external abrasion-resistant coating according to the invention and is therefore preferably able to undergo the curing of this external abrasion-resistant coating, especially at a temperature equal to or lower than 120°C, preferably ranges from 80°C to 110°C, typically ranges from 90°C to 100°C during a time equal to or lower than 4 hours, preferably equal to or lower than three hours.

The optical article of the invention may be made antistatic that is to say not to retain and/or develop a substantial static charge, by incorporating at least one electrically conductive layer into the stack present on the surface of the article.

The ability for a glass to evacuate a static charge obtained after rubbing with a piece of cloth or using any other procedure to generate a static charge (charge applied by corona...) may be quantified by measuring the time it takes for said charge to dissipate. Thus, antistatic glasses have a discharge time of about a few hundred milliseconds, preferably 500 ms or less, whereas it is of about several tens of seconds for a static glass. In the present application, discharge times are measured according to the method exposed in the French application FR 2 943 798.

As used herein, an "electrically conductive layer" or an "antistatic layer" is intended to mean a layer which, due to its presence on the surface of a non- antistatic substrate (i.e. having a discharge time higher than 500 ms), enables to have a discharge time of 500 ms or less after a static charge has been applied onto the surface thereof.

The electrically conductive layer may be located on various places in the stack, generally in or in contact with the interferential coating, provided the antireflective properties thereof are not affected. It is preferably located between two layers of the interferential coating, and/or is adjacent to a layer with a high refractive index of such interferential coating. Preferably, the electrically conductive layer is located immediately under a layer with a low refractive index of the interferential coating, most preferably is the penultimate layer of the interferential coating by being located immediately under the silica-based outer layer of the interferential coating: e.g. the "LI outer layer".

The electrically conductive layer should be thin enough not to alter the transparency of the interferential coating. The electrically conductive layer is preferably made from an electrically conductive and highly transparent material, generally an optionally doped metal oxide. In this case, the thickness thereof preferably varies from 1 to 15 nm, more preferably from 1 to 10 nm. Preferably, the electrically conductive layer comprises an optionally doped metal oxide, selected from indium, tin, zinc oxides and mixtures thereof. Tin-indium oxide (In₂O₃:Sn, tin-doped indium oxide), aluminum-doped zinc oxide (ZnO:AI), indium oxide (In₂O₃) and tin oxide (SnO₂) are preferred. In a most preferred embodiment, the electrically conductive and optically transparent layer is a tin-indium oxide layer, noted ITO layer or a tin oxide layer.

### B.3 Sub-layer

In one embodiment of the present invention, the interferential coating may be deposited (generally directly) onto a sub-layer (i.e.: the sub-layer is positioned between the substrate and the interferential coating). It should be noted that such sub-layer does not belong to the interferential coating.

As used herein, a sub-layer or adhesion layer is intended to mean a relatively thick coating, used in order to improve the mechanical properties such as the abrasion resistance and/or the scratch resistance of said coating and/or so as to reinforce its adhesion to the substrate or to the underlying coating.

Because of its relatively high thickness, the sub-layer does not generally take part to the antireflective or reflective optical activity, especially when it has a refractive index close to that of the underlying substrate (which is generally a standard anti-abrasion and anti-scratch coating - that may be structurally different from the claimed external abrasion-resistant coating described hereafter - this standard anti-abrasion will be named hereafter "the internal abrasion-resistant coatinting) or the bare substrate).

The sub-layer should have a thickness that is sufficient for promoting the abrasion resistance of the interferential coating, but preferably not to such an extent that a light absorption could be caused, which, depending on the sub-layer nature, could significantly reduce the relative transmission factor τᵥ. Its thickness is generally lower than 300 nm, more preferably lower than 200 nm, and is generally higher than 90 nm, more preferably higher than 100 nm.

The sub-layer preferably comprises a SiO₂-based layer, this layer comprising preferably at least 80% by weight of silica, more preferably at least 90% by weight of silica, relative to the layer total weight, and even more preferably consists in a silica layer. The thickness of such silica-based layer is generally lower than 300 nm, more preferably lower than 200 nm, and is generally higher than 90 nm, more preferably higher than 100 nm.

In a particular embodiment, the sub-layer consists in a SiO₂ layer.

According to another embodiment, the interferential coating is not deposited onto a sub-layer such as described above.

### B.4 Process

The various layers of the interferential coating and the above-mentioned sublayer are preferably deposited by vapor phase deposition, under vacuum, in a vacuum deposition chamber, according to any of the following methods: i) by evaporation, optionally under ion beam assistance; ii) by ion-beam spraying; iii) by cathode sputtering; iv) by plasma-assisted chemical vapor deposition. These various methods are described in the following references "Thin Film Processes" and "Thin Film Processes II," Vossen & Kern, Ed., Academic Press, 1978 and 1991, respectively. A particularly recommended method is evaporation under vacuum. Preferably, the deposition of each of the above-mentioned layers is conducted by evaporation under vacuum. Such a process does advantageously avoid heating the substrate, which is particularly interesting for coating heat-sensitive substrates such as organic glasses.

### B.5 The external abrasion-resistant layer

As previously mentioned, the invention is characterized in that, the interferential coating is coated, preferably directly coated, with an external abrasion-resistant coating having a physical thickness ranging from 1 µm to 5 µm.

As used herein, a "a physical thickness ranging from 1 µm to 5 µm" includes the followings values (µm) and any intervals among them: 1; 1.1; 1.2; 1.3; 1.4; 1.5; 1.6; 1.7; 1.8; 1.9; 2.0; 2.1; 2.2; 2.3; 2.4; 2.5; 2.6; 2.7; 2.8; 3.0; 3.1; 3.2; 3.3; 3.4; 3.5; 3.6; 3.7; 3.8; 3.9; 4.0; 4.1; 4.2; 4.3; 4.4; 4.5; 4.6; 4.7; 4.8; 4.9; 5.0. Preferably, the external abrasion-resistant coating has a physical thickness ranging from 1 µm to 4 µm, in particular ranging from 1 µm to 3 µm and typically ranging from 2 µm to 3.5 µm.

In general, the external abrasion-resistant coating is the outermost layer of the optical article. Alternatively, this one may be located directly underneath an anti-fouling coating, this anti-fouling coating being in that case the outermost layer of the optical article.

The external abrasion-resistant coating interacts therefore with the different HI and LI layers composing the interferential coating defined above and hence may change the optical and colorimetric of this interferential coating. However, as defined in the current invention, the external abrasion-resistant coating does not belong to the interferential coating; indeed, its main function is to improve the strengthening abrasion and/or scratch resistance of the final optical article.

Specifically, the external abrasion-resistant coating may be formed from a curable composition comprising (A) at least one binder comprising at least one epoxysilane having at least two hydrolysable groups directly linked to the Si atom of the epoxysilane, and/or its hydrolysis product and optionally (B) one or more mineral fillers intended to increase the hardness and/or the refractive index of the coating once cured such as at least colloidal particles.

### (A) One epoxysilane

In particular, (A) said epoxysilane has the following formula:

RₙYₘSi(X)₄₋ₙ₋ₘ (I)

wherein
R groups, identical or different, are monovalent organic groups linked to the Si atom by a carbon atom and comprising at least one, preferably one epoxy function ;
X groups, identical or different, are hydrolyzable groups ;
Y is a monovalent organic group linked to the Si atom by a carbon atom, n and m being integers such as n = 1 or 2 and n+m = 1 or 2.

Hydrolyzable groups X designate independently from each other and without limitation alkoxy groups -O-R¹, wherein R¹ preferably represents a linear or branched alkyl group, preferably a C₁-C₄ alkyl group or an alkoxyalkyl group, an acyloxy group -O-C(O)R³ wherein R³ is an alkyl group, preferably a C₁-C₆ alkyl group, better an ethyl or methyl group, halogens such as CI or Br, amino group optionally substituted by one or two functional groups such as an alkyl group or silane group, for example group -NHSiMe₃.

Preferably X groups are alkoxy groups, more preferably methoxy, ethoxy, propoxy or butoxy, and better methoxy or ethoxy groups, which means that compounds (I) are preferably epoxyalkoxysilanes.

Monovalent R groups preferably comprise at least one single epoxy function.

By epoxy function, one means a group of several atoms wherein an oxygen atom is directly linked to two adjacent or non-adjacent, preferably adjacent, carbon atoms containing chain or cyclic carbon system.

Between these epoxy functions, oxirane functions are preferred, i.e. saturated cyclic ether groups with three links.

Preferred R groups have the following formulas V and VI: 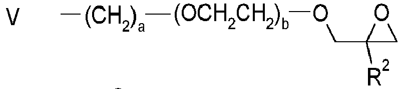 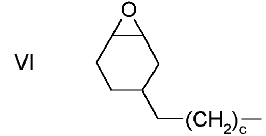 wherein R² is an alkyl group, preferably a methyl group or a hydrogen atom, more preferably a hydrogen atom ; a and c are integers ranging from 1 to 6 and b is representing 0, 1 or 2 .

The preferred group of formule V is γ-glycidoxypropyl group (R² = H, a = 3, b = 0) and the preferred (3,4-epoxycyclohexyl)alkyl group of formula VI is β-(3,4-epoxycyclohexyl)ethyl (c = 1). The γ-glycidoxyethoxypropyl group can also be used (R² = H, a = 3, b = 1).

Preferred epoxysilanes of formula I are epoxyalkoxysilanes preferably having one group R (n=1) and preferably three alkoxy groups, preferably OCH₃, directly linked to the Si atom.

Particularly preferred epoxytrialkoxysilanes have the formulas corresponding to the following formulas VII et VIII : 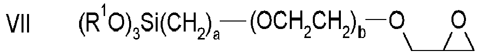 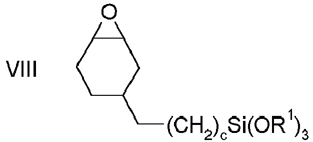 wherein R¹ designates an alkyl group having 1 to 6 carbon atoms, preferably a methyl or ethyl group and a, b et c are such as defined above.

Examples of epoxyalkoxysilanes of formula VII are y -glycidoxy methyl trimethoxysilane, γ-glycidoxy methyl triethoxysilane, γ-glycidoxy methyl tripropoxysilane, γ-glycidoxy ethyl trimethoxysilane, γ-glycidoxy ethyl triethoxysilane, y -glycidoxy ethyl trimethoxysilane, γ-glycidoxy ethyl triethoxysilane, γ-glycidoxy ethyl tripropoxysilane, γ-glycidoxy propyl trimethoxysilane, γ-γglycidoxy propyl triethoxysilane, γ-glycidoxy propyl tripropoxysilane, γ-glycidoxy propyl trimethoxysilane, γ-glycidoxy propyl triethoxysilane, y - glycidoxy propyl tripropoxysilane, y -glycidoxy propyl trimethoxysilane, y -glycidoxy propyl triethoxysilane, y -glycidoxy propyl tripropoxysilane, hydrolyzates thereof, and mixtures thereof.

Other examples of usable epoxytrialkoxysilanes are given in US 4,294,950, US 4,211,823, US 5,015,523 , EP 0614957 and WO 94/10230 , which are hereby incorporated by reference.

The preferred epoxyalkoxysilanes are chosen in the group consisting of γ-glycidoxypropyl triethoxysilane, γ-glycidoxypropyl trimethoxysilane, 2-(3,4-epoxycyclohexyl) ethyltrimethoxysilane and 2-(3,4-epoxycyclohexyl) ethyltriethoxysilane or a mixture of two or more thereof.
γ -glycidoxypropyltrimethoxysilane (GLYMO) which is commercialized among others by Merck is preferred.

The content of the dry extract of the at least one epoxyalkoxysilane in the dry extract of the curable composition is ranging from 20 to 80 %, preferably 25 to 60 % by weight, based on the total weight of the dry extract

The expression "dry extract or weight of solid material from epoxysilanes of formula RₙYₘSi(X)₄₋ₙ₋ₘ" means the theoretical dry extract from those silanes which is the calculated weight of unit RₙYₘSi(O)_{(4-n-m)/2}.

The presence of the epoxyalkoxysilane is suitable in the composition of the external abrasion-resistant coating. It provides a highly crosslinked matrix.

The preferred epoxysilanes having an organic link between the Si atom and the epoxy group also provide a certain level of flexibility.

Optionally, the binder may comprise at least one compound of formula:

M(Z)ₓ (IX)

or a hydrolyzate thereof, in which M is a metal or metalloid, the Z groups are identical or different and represent hydrolyzable groups and x is the valence of the metal or metalloid M.

The Z groups in the compound of formula IX are identical or different from the X groups of formula I.

Consequently, the Z groups may represent hydrolyzable groups independently chosen from the hydrolyzable groups which have been previously cited when describing the X groups. It is worth noting that M-OH bonds may be initially present in the compounds of formula IX, which are considered in this case as hydrolyzates. Hydrolyzates also encompass metal or metalloid salts.

Preferred compounds of formula IX are metal or metalloid alkoxides and chlorides, ideally alkoxides M(OR)ₓ wherein the R groups are independently an alkyl group, usually having 1-6 carbon atoms, such as ethyl, propyl, isopropyl, sec-butyl or butyl, and x is as defined above.

M represents a metal or metalloid, which valence x preferably ranges from 2 to 6.

Preferably, compounds of formula IX are tetravalent species (x =4). M atoms include but are not limited to metals such as Sn, Al, B, transition metals such as Zr, Hf, Sc, Nb, V, Y, Ba, Cr, Ta, W or Ti or metalloids such as silicon or germanium. M is more preferably silicon, zirconium, aluminum or titanium, and ideally silicon.

Most preferred compounds of formula IX having formula Si(Z)₄ are those in which the Z groups are hydrolyzable groups which are identical or different, preferably an alkoxy group, and better an ethoxy group. Examples of such compounds are tetraalkoxysilanes such as tetraethoxysilane Si(OC₂H₅)₄ (TEOS), tetramethoxysilane Si(OCH₃)₄ (TMOS), tetra(n-propoxy)silane, tetra(i-propoxy)silane, tetra(n-butoxy)silane, tetra(sec-butoxy)silane or tetra(t-butoxy)silane, preferably TEOS.

Examples of other compounds of formula IX which may be used are zirconium compounds, preferably zirconium alkoxides such as zirconium n-propoxide, aluminum compounds, preferably aluminum alkoxides such as aluminum-sec-butoxide and aluminum isopropoxide, titanium compounds, preferably tetra-alkyl titanates such as titanium tetraethoxide, titanium tetra-isopropoxide, tantalum alkoxides, trimethylborate, barium acetate and mixtures thereof.

The binder may comprise mixtures of any number of the above cited epoxysilanes of formula I, or mixtures of those silanes and compounds of formula IX. The content of dry extract of compound of formula IX in the dry extract of the curable composition is ranging from 0.5 to 30%, preferably ranging from 1 to 20%, and better from 2 to 10% by weight, based on the total weight of the dry extract of the curable composition. The expression "dry extract or weight of solid material from compound of formula IX" means the theoretical dry extract from those silanes which is the calculated weight of unit MO_{x/2}.

Compounds of formula IX or their hydrolyzates are improving the crosslinking of the coating obtained from the curable composition of the invention and thereby providing a high hardness. The film forming material may be a water soluble polymer, or may be used in the form of a latex or a mixture of latexes.

According to an embodiment, a film forming material may be used in the curable coating composition. This film forming material comprises film forming materials based on functionalized silane, siloxane or hydrolyzates thereof which are different from the compounds of formulas I and IX described above. They may also act as adhesion promoters toward organic or mineral glass substrates. These film forming materials may also act as cross-linking agents toward conductive polymers used under the form of polystyrene sulfonate salts and the like. They are will-known from the skilled person and will ne be detail hereafter.

According to another embodiment, there is no film forming material as defined above in the binder. Preferably the curable composition does not comprise any film forming material in addition to the compounds of formula I or IX. According to this embodiment, the curable composition neither comprises a film forming material comprising a polymer material, generally organic, such as formed from a thermoplastic or thermosetting material, optionally cross-linkable through polycondensation, polyaddition or hydrolysis. Especially, the curable composition neither comprises a film forming materials comprising soluble or dispersible in water or in an aqueous composition such as a hydro-alcoholic composition and/or water soluble polymer that may be used in the form of a latex or a mixture of latexes. Among water soluble or dispersible binders there may be cited homopolymers or copolymers of the following monomers: styrene, vinylidene chloride, vinyl chloride, alkyl acrylates, alkyl methacrylates, (meth)acrylamides, polyester homopolymers or copolymers, poly(urethane-acrylate), poly(ester-urethane), polyether, vinyl polyacetate, polyepoxyde, polybutadiene, polyacrylonitrile, polyamide, melamine, polyurethane, polyvinylic alcohol, copolymers thereof, and mixtures thereof. Among poly(meth)acrylate binders may be cited poly(methyl methacrylate).

### (B) The optional fillers

In some embodiments, the curable coating composition comprises (B) one or more fillers generally nanoparticles (or nanocrystals) intended to increase the hardness and/or the refractive index of the coating once cured, such as at least colloidal particles.

Preferably, the fillers are typically nanoparticles.

By "nanoparticles", it is meant particles which diameter (or longest dimension) is lower than 1 µm, preferably lower than 150 nm and still better lower than 100 nm. In the present invention, fillers or nanoparticles preferably have a diameter ranging from 2 to 100 nm, more preferably from 2 to 50 nm, and even better from 5 to 50 nm.

Suitable inorganic nanoparticles are for example nanoparticles of aluminum oxide Al₂O₃, silicon oxide SiO₂, zirconium oxide ZrO₂, titanium oxide TiO₂, antimony oxide Sb₂O₅, tantalum oxide Ta₂O₅, zinc oxide, tin oxide SnO₂, indium oxide, cerium oxide, Si₃N₄, or their mixtures.

It is also possible to use particles of mixed oxides or composite particles, for example those having a core/shell structure. Using different types of nanoparticles allows making hetero-structured nanoparticles layers.

Preferably, the nanoparticles are particles of aluminum oxide, tin oxide, zirconium oxide or silicon oxide SiO2, more preferably SiO2 nanoparticles. Mineral fillers are preferably used under colloidal form, i.e. under the form of fine particles dispersed in a dispersing medium such as water, an alcohol, a ketone, an ester or mixtures thereof, preferably an alcohol.

Generally, based on the total weight of the dry extract, the content of said at least fillers in the dry extract of the curable composition ranges from more than 2% up to 50% by weight, preferably 10% to 40% and even better 20 to 40%, based on the total weight of the dry extract.

The particles are used under colloidal form, i.e. under the form of fine particles, which diameter (or longest dimension) is preferably lower than 150 nm and still better lower than 100 nm, dispersed in a dispersing medium such as water, an alcohol, a ketone, an ester or mixtures thereof, preferably an alcohol.

Preferably, the particles of said at least one non-conductive oxide have a size ranges 2 nm to 100 nm, better ranges from 2 to 50 nm, and even better ranges from 5 to 50 nm.

The size of the particles in the liquid is determined by conventional methods such as light scattering, and particles size analyzer. The size of the particles in the solid is determined by tunneling electron microscope or light scattering.

The curable coating composition according to the invention generally has a dry extract (ratio of total weight of solid compounds after evaporation of solvents / total weight of the composition) lower than 80 %, preferably ranging from 0.2 to 50 %, even better from 1 to 30 %.

### (C) Catalyst

The curable composition of the invention optionally comprises a (C) catalytic amount of at least one curing catalyst, so as to accelerate the curing step.

Examples of curing catalysts are aluminum acetylacetonate, carboxylates of metals such as zinc, titanium, zirconium, tin or magnesium.

Condensation catalysts such as saturated or unsaturated polyfunctional acids or acid anhydrides may also be used, in particular maleic acid, itaconic acid, trimellitic acid or trimellitic anhydride. Numerous examples of curing and/or condensation catalysts are given in "Chemistry and Technology of the Epoxy Resins", B. Ellis (Ed.) Chapman Hall, New York, 1993 and "Epoxy Resins Chemistry and Technology" 2eme edition, C. A. May (Ed.), Marcel Dekker, New York, 1988.

In general, the catalysts described above are used according to the invention in an amount ranging from 0.01 to 10%, preferably from 0.1 to 5% by weight based on the total weight of the curable composition.

Preferred external abrasion-resistant coatings are those made by curing a precursor composition including epoxyalkoxysilanes and/or a hydrolyzate thereof, an inorganic filler(s) such as silica and a curing catalyst. As epoxysilanes, the same epoxysilanes having at least two hydrolyzable groups, especially epoxysilanes of formula V or VI, as described above for the curable composition of the invention are preferably used in the external abrasion resistant coating and have especially a physical thickness ranging from 2 to 3.5 µm.

The most preferred external abrasion-resistant coating compositions are those comprising as the main constituents an epoxyalkoxysilane such as, for example, [gamma]-glycidoxypropyltrimethoxysilane (GLYMO) and a dialkyldialkoxysilane such as, for example dimethyldiethoxysilane (DMDES), colloidal silica and a catalytic amount of a curing catalyst such as aluminum acetylacetonate or a hydrolyzate thereof, the remaining of the composition being essentially comprised of solvents typically used for formulating these compositions in the art.

Examples of abrasion resistant coating compositions are disclosed in EP 614957, U.S. Pat. No. 4,211,823, WO 94/10230, U.S. Pat. No. 5,015,523.

In general, such a curable composition may be cured at a temperature lower than or equal to 120°C, preferably lower than or equal to 110°C and typically lower than or equal to 100°C, during a time lower than or equal to 4 hours, preferably lower than or equal to 3 hours.

For instance, the external abrasion-resistant coating may be formed from commercial sol-gel abrasion- resistant coating compositions mainly containing organopolysiloxanes, silica colloids or titanium dioxide colloids, methanol and/or 1 -methoxy-2-propanol.

According to an embodiment, the external abrasion-resistant coating may be a monolayer, preferably made by curing the above-mentioned curable composition.

According to another embodiment, the external abrasion-resistant coating may be a bilayer formed for instance from a first thin layer of SiO₂ (having a physical thickness ranges from 5 to 80 nm, in particular from 5 to 50 nm, typically from 5 to 40 nm) coated directly with a second layer preferably made by curing the above-mentioned curable composition. This thin layer of SiO₂ may be for instance suitable when the external abrasion-resistant coating is deposited on the rear face of the optical article devoid of a interferential coating or an antireflective coating. It enables to improve the adhesion for instance between the external abrasion-resistant coating according to the invention and the underlying internal abrasion-resistant coating.

The curable composition forming the external abrasion-resistant coating according to the invention may be deposited, preferably directly deposited onto the interferential coating, preferably onto said entire surface of the interferential coating (front face) or for instance onto a classical antireflective coating (rear face), , by any of the methods used in coating technology such as, for example, spray coating, spin coating, flow coating brush coating, dip coating or roll-coating. Spin coating and dip coating are the preferred method.

### B.6 Other functional layers

In some applications, it is preferred that the main surface of the substrate be coated with one or more functional coatings improving its optical and/or mechanical properties, prior to depositing the interferential coating of the invention.

These functional coatings traditionally used in optics may be, without limitation, an impact-resistant primer layer, an internal abrasion-resistant coating (also named hard coat) , an antistatic coating especially on the concave face of the optical article, or a stack made of two or more of such coatings.

### B.61 The internal abrasion-resistant coating

The interferential coating of the invention such as described at part B.2 is preferably deposited onto an internal abrasion-resistant coating. Preferably, this internal abrasion-resistant coating is sandwiched between the front main face of the substrate and the interferential coating.

Especially, an internal abrasion-resistant coating is also coated onto the rear main face of the substrate and is preferably sandwiched between the rear main face of the substrate and the interferential coating and/or another interferential coating, such as an antireflection coating as mentioned above.

This internal abrasion-resistant coating may be any layer traditionally used as an anti-abrasion and/or anti-scratch coating in the field of ophthalmic lenses.

The internal abrasion-resistant coatings are preferably hard coatings based on poly(meth)acrylates or silanes, generally comprising one or more mineral fillers intended to increase the hardness and/or the refractive index of the coating once cured.

The internal abrasion-resistant coating are preferably prepared from compositions such as described above for the external abrasion-resistant coating (part B.5). Hence, the suitable compositions will ne be further described hereafter. Preferably, the internal abrasion-resistant coating comprises at least one alkoxysilane and/or a hydrolyzate thereof, obtained for example through hydrolysis with a hydrochloric acid solution and optionally condensation and/or curing catalysts.

Suitable internal abrasion-resistant coatings that are recommended include coatings based on composition comprising epoxysilane hydrolyzates such as those described in the patents FR 2 702 486 (EP 0 614 957 more preferably example 3), US 4 211 823 and US 5 015 523.

According to an embodiment, the external abrasion-resistant coating and the internal abrasion-resistant coating are different (i.e.: formed from two different compositions).

According to another embodiment, the material of the internal abrasion resistant coating is chosen among the same materials as the ones indicated for the external abrasion resistant coating, as disclosed in the part B.5.

In particular, the external abrasion-resistant coating and the internal abrasion-resistant coating materials are identical (i.e.: made of the same composition).

The composition of the internal abrasion-resistant coating may be deposited onto the main faces (front face and/or rear face) of the substrate by dip- or spin-coating. It is then cured by a suitable method (preferably using heat or ultraviolet radiation).

The thickness of the anti-abrasion and/or scratch-resistant coating does generally vary from 1 µm to 10 µm, in particular ranging from 2 µm to 5 µm and typically ranging from 2 µm to 3.5 µm. As used herein, a "range from 1 to 10 µm " includes the followings values (µm) and any intervals among them: 1; 2; 3; 4; 5; 6; 7; 8; 9; 10.

In general, the substrate and the optional internal abrasion-resistant coating generally coated onto the substrate have a similar/close refractive index so as to avoid fringes or cosmetic defects.

For instance, the internal abrasion-resistant coating may be a hard coating that provides certain abrasion-resistant and/or anti-scratch properties to the base substrate.

### B.62 Primer coating possibly associated to the internal abrasion-resistant coating

Prior to depositing the internal abrasion-resistant coating, it is possible to apply onto the substrate a primer coating to improve the impact resistance and/or the adhesion of the subsequent layers in the final product. This coating may be any impact-resistant primer layer traditionally used for articles in a transparent polymer material, such as ophthalmic lenses.

On the contrary, preferably no primer composition is deposited on the interferential coating prior to the deposition of the external hard coating, the latter being deposited directly on the outermost layer of the interferential coating and constituting the outermost layer of the optical article (or the antepenultima one when an antifouling top coat exists).

Preferred primer compositions for use in association with the internal hard coating are compositions based on polyurethanes and compositions based on latexes, especially polyurethane type latexes optionally containing polyester units.

Such primer compositions may be deposited onto the article faces by dip- or spin-coating, thereafter be dried at a temperature of at least 70 °C and up to 100 °C, preferably of about 90 °C, for a time period ranging from 2 minutes to 2 hours, generally of about 15 minutes, to form primer layers having thicknesses, after curing, of from 0,2 to 2,5 µm, preferably of from 0,5 to 1,5 µm. In addition to the epoxysilane having at least two hydrolysable groups directly linked to the Si atom of the epoxysilane, and the optional compound of formula IX, the binder can comprise any film-forming material capable of improving adhesion of the internal curable coating to an underlying layer and/or an upper layer if any are present, and/or integrity of the antistatic coating (will be abbreviated by film forming material). The film forming material may also allow strengthening abrasion and/or scratch resistance of the final optical article, depending on its nature.

The film forming material has to be compatible with the conductive polymer, i.e. not be detrimental to its antistatic properties, and has to form a stable solution by avoiding precipitation of said conductive polymer or aggregation thereof in more or less big particles, which would generate optical flaws.

The choice of the film forming material is generally determined by the employed system of solvents in the coating composition, for it has to be soluble or dispersible in said system of solvents.

The film forming material preferably is a polymer material, generally organic. It may be formed from a thermoplastic or thermosetting material, optionally cross-linkable through polycondensation, polyaddition or hydrolysis. Mixtures of film forming materials from different categories may also be employed.

Film forming materials are preferentially soluble or dispersible in water or in an aqueous composition such as a hydro-alcoholic composition. Among water soluble or dispersible binders there may be cited homopolymers or copolymers of the following monomers: styrene, vinylidene chloride, vinyl chloride, alkyl acrylates, alkyl methacrylates, (meth)acrylamides, polyester homopolymers or copolymers, poly(urethane-acrylate), poly(ester-urethane), polyether, vinyl polyacetate, polyepoxyde, polybutadiene, polyacrylonitrile, polyamide, melamine, polyurethane, polyvinylic alcohol, copolymers thereof, and mixtures thereof. Among poly(meth)acrylate binders may be cited poly(methyl methacrylate).

The film forming material may be a water soluble polymer, or may be used in the form of a latex or a mixture of latexes.

As it is well known, latexes are stable dispersions of particles of at least one polymer in an aqueous medium. Preferred latexes are polyurethane latexes, poly(meth)acrylic latexes, polyester latexes and mixtures thereof. The latex may comprise hydrophilic functional groups such as sulfonic or carboxylic acid groups. As examples, polyester sulfones, such as the aqueous composition Eastek^{®} 12100-02-30% commercialized by Eastman Chemical Company, and polyurethane sulfones may be cited. Optionally, the latex is of the core-shell type.

Poly(meth)acrylic latexes are generally latexes of copolymers mainly formed from (meth)acrylate monomers, such as for example ethyl, butyl, methoxyethyl or ethoxyethyl (meth)acrylate, and generally from a minor amount of at least another co-monomer, such as for example styrene.

Preferred poly(meth)acrylic latexes are acrylate-styrene copolymer latexes, which are commercially available from ZENECA RESINS under the trade name NEOCRYL^{®}, such as NEOCRYL^{®} A-639, or from B. F. Goodrich Chemical Co. under the trade name CARBOSET^{®}, such as CARBOSET^{®} CR-714.

Preferred polyurethane latexes are polyurethane latexes comprising polyester moieties, preferably aliphatic polyester moieties. Still preferably, polyurethane units are obtained by polymerizing at least one aliphatic polyisocyanate with at least one aliphatic polyol. Those latexes provide antistatic coatings based on polyurethane having polyester moieties.

Such polyurethane-polyester latexes are commercially available from ZENECA RESINS under the trade name Neorez^{®} (e.g., Neorez^{®} R-962, Neorez^{®} R-972, Neorez^{®} R-986, Neorez^{®} R-9603) or BAXENDEN CHEMICALS, a subsidiary of WITCO Corporation, under the trade name Witcobond^{®} (e.g., Witcobond^{®} 232, Witcobond^{®} 234, Witcobond^{®} 240, Witcobond^{®} 242). Other commercially available polyurethane latexes are Bayhydrol^{®} 121 or Bayhydrol^{®} 140AQ, commercialized by H. C. Starck.

### B.63 Combined internal abrasion-resistant coating and primer

The internal hard coating may be combined to a primer.

The combined internal hard coating and primer may have a thickness of between 3 nm and 6 nm, more preferably of 3.5 nm, and may be applied to the base substrate by dip coating and the like. It may have a refractive index of around 1.5. In an example, the Mithril^{®}has a refractive index of 1.6.

The preferred combination of this kind involves polyurethane latex as a primer, followed by polysiloxane hard coating as internal hard coating.

The preferred primer is based on a hydrolysate of y- glycidoxypropyltrimethoxysilane (GLYMO) and dimethyldiethoxysilane (DIVIDES), with colloidal silica and aluminum acetyl acetonate.

The preferred internal hard coating of this combination is the one disclosed in EP 0 614 957 example 3.

The preferred combined internal hard coating and primer is the product sold under the trademark Mithril^{®} provided by the company Essilor.

### B.64 Antifouling topcoat

The ophthalmic lens according to the invention may also comprise coatings formed on the external abrasion-resistant coating (or on the antireflective coating on the rear face) and capable of modifying the surface properties thereof, such as hydrophobic and/or oleophobic coatings (antifouling topcoat). These coatings are the outermost layer of the optical article according to the invention. As a rule, their thickness is lower than or equal to 10 nm, does preferably range from 1 to 10 nm, more preferably from 1 to 5 nm.

Instead of the hydrophobic coating, a hydrophilic coating may be used which provides antifog properties, or an antifog precursor coating which provides antifog properties when associated with a surfactant. Examples of such antifog precursor coatings are described in the patent application WO 2011/080472.

### B.7 Characteristics of the optical article according to the invention

According to the invention, despite the presence of the external abrasion-resistant layer coated onto the interferential coating, the optical article has reflective properties and has on its front main face a mean light reflection factor in the visible region R_{v (front face OA)} that is higher than or equal to 5 % for an angle of incidence of 15°, more preferably higher than or equal to 10 % for an angle of incidence of 15°.

According to the invention, a mean light reflection factor in the visible region Rᵥ that is "higher than 5 %" includes the following values (in %) and/or any intervals comprised between these values (limits included 5.0; 5.5; 6.0; 6.5; 7.0; 7.5; 8.0; 8.5; 9.0; 9.5; 10.0; 10.5; 11.0; 11.5; 12.0; 12.5; 13.0; 13.5; 14.0; 14.5; 15.0; 15.5; 16.0; 16.5; 17.0; 17.5; 18.0; 19.0; 20.0 ; etc.

In addition, the optical article has suitable colorimetric properties.

Hence, as for the interferential coating, it is possible to prepare optical artcile without limitation as regards their hue angle h (0° to 360°).

In particular, the optical article has a Chroma C* measured in the CIE L*, a*, b* color system that has a high value. In general, the Chroma C* is higher than or equal to 15, preferably higher than or equal to 20, in particular higher than or equal to 25 and typically higher than or equal to 30, such as higher than or equal to 40.

However, the presence of the external abrasion-coating may slighlty change the colorimetric properties of the interferential coating including composing the optical article. As it will be described hereafter in the description of the process for designing, its is possible to amend the thickness of the interferential coating to obtain an optical article having the targeted optical and colorimetric characteristics.

According to this embodiment,
- the Rv _{(front face OA)} of the optical article is predetermined and is identical or has a percent difference in absolute terms below 5% as compared with a targeted optical article comprising the same substrate coated with a targeted interferential coating that has the same number of LI layer(s) and HI layer(s) and made of the same materials as the interferential coating, said targeted optical article being free of said external abrasion-resistant coating, and/or
- the optical article has a predetermined Chroma C* that is equal to or has a number difference in absolute terms below 10, preferably below 5 as compared with said targeted optical article and/or
- the optical article has a predetermined hue, h, that is equal to or has a number difference in absolute terms below 10°, preferably below 5° as compared with said targeted optical article.

According to an embodiment, an optical article according to the invention comprises a tinted or colored substrate that is successively coated :
- on its front face with an impact-resistant primer layer, the internal abrasion-resistant coating, the interferential coating, the external abrasion-resistant coating
- on its rear face with an optional impact-resistant primer layer, the internal abrasion-resistant coating and an optional interferential coating (antireflective) and an optional hydrophobic coating

According to another embodiment, a tinted or colored optical article according to the invention comprises a substrate that is successively coated :
- on its front face with an impact-resistant primer layer, the internal abrasion-resistant coating, the interferential coating, the external abrasion-resistant coating and with a hydrophobic and/or oleophobic coating or with a hydrophilic coating which provides antifog properties, or an antifog precursor coating;
- on its rear face with an optional impact-resistant primer layer, the internal abrasion-resistant coating, the external abrasion-resistant coating and a hydrophobic and/or oleophobic coating or with a hydrophilic coating which provides antifog properties, or an antifog precursor coating.

When the internal abrasion-resistant coating is intended to be coated with the external abrasion-resistant coating, an adhesion layer comprising for instance SiO₂ is sandwiched between these two abrasion-resistant coatings.

The optical article according to the invention is preferably an ophthalmic lens, such as spectacle lens, or a blank for spectacle lens. The lens may be a solar lens, which may be corrective or not.

Hence, the present invention provides an optical article with an improved conception, comprising a combination of:
- an optional internal abrasion-resistant coating,
- an interferential coating having a relatively thin stack made of layers,
- the external abrasion-resistant coating,
this combination allows to obtain satisfactory interferential performances and a good compromise between high reflection at the same times in the visible region, while having good cosmetic appearance. In addition, this combination surprisingly improves the abrasion resistance properties, such as mechanical crazing properties, as well as the thermal crazing properties of the optical article.

Especially, the total thickness of optical article (including all the different layers, such as the external abrasion-resistant coating, the internal abrasion-resistant coating, the interferential coating and other functional coating) is equal to or higher than 400 nm, preferably equal to or higher than 430 nm and in particular equal to or higher than 450 nm. In general, this total thickness of optical article is lower than or equal to 800 nm, preferably lower than or equal to 780 nm and typically lower than or equal to 770 nm.

Due to this specific combination and especially the presence of the external abrasion-resistant coating according to the invention, the optical articles of the invention exhibit preferably a high value

Moreover, the optical article according to the invention has a good resistance to heat and temperature variations, i.e., a high critical temperature. In the present patent application, the critical temperature of an article is defined as being the temperature starting from which cracks appear in a coating present at the surface of the substrate (on either main face), which results in degradation of the coating, generally the interferential coating. The critical temperature of an article according to the invention was measured in the manner indicated in patent application WO 2008/001011. It was measured one week after production of the article. The critical temperature of an article coated according to the invention is preferably > 60°C, more preferably > 70°C, 75°C, 80°C, 85°C or 100°C.

In one embodiment, the optical article according to the invention does not absorb in the visible or not much, which means, in the context of the present application, that its relative light transmission factor in the visible spectrum Tv is higher than or equal to any one of the following values: 80%, 81 %, 82 %, 83 %, 84 %, 85 %, 86 %, 87 %, 88%, 89%, 90%. Said Tv factor preferably ranges from 75 % to 90 %. In another embodiment, Tv ranges from 85 % to 92 %.

In another embodiment, the optical article according to the invention absorbs in the visible, for example thanks to absorbing dyes, which means, in the context of the present application, that its relative light transmission factor in the visible spectrum Tv is lower than or equal to any one of the following values: 79%, 78 %, 43%, 18%, 8%, 5%.

Accordingly, different tints of sunglasses with different visible light mean transmission factors Tv can be obtained:
- from 43 to 80 % (known as sunglasses of category or class 1),
- from 18 to 43 % (known as sunglasses of class 2),
- from 8 to 18% (known as sunglasses of class 3), exemplified in the given examples,
- below 8 % (known as sunglasses of class 4).

The Tv factor, also called "luminous transmission" of the system, is such as defined in ISO standard 13666:1998 and is measured accordingly to standard ISO 8980-3. It is defined as the average in the 380-780 nm wavelength range that is weighted according to the sensitivity of the eye at each wavelength of the range and measured under D65 illumination conditions (daylight).

In general, the front interferential coating has the same number of LI layer(s) and HI layer(s) and is made of the same materials as a front interferential coating of reference of an optical article of reference (OAR),
the OAR, having a front main face and a rear main face, comprising :
- a base element, having a front main surface and a rear main surface, which is identical to the base element of the OA;
- the front interferential coating of reference that is deposited onto said front main surface of the base element,
- the OAR is free of any external abrasion-resistant coating and has, on its front main face, a mean light reflection factor of reference in the visible region Rv(ref) that is higher than or equal to 5 % for an angle of incidence of 15°, a Chroma of reference C*(ref) and a hue of reference h(ref):
- the Rv_{(front face OA)} of said optical article is predetermined and is identical or has a percent difference in absolute terms below 10% as compared with the Rv(ref) of the OAR, and/or
- said optical article has a predetermined Chroma C* that is equal to or has a number difference in absolute terms below 10, preferably below 5 as compared with the Chroma C*(ref) of the OAR, and/or
- said optical article has a predetermined hue, h, that is equal to or has a number difference in absolute terms below 10°, preferably below 5° as compared with said h(ref) of OAR.

### C) The method of designing an optical article

The invention also relates to a method of designing an optical article such as defined above, implemented by a computer program comprising an optical article design software, comprising the following steps:
(a) from an optical article of reference comprising at least a reference substrate (i.e.: base element) having a front main face and a rear main face.
   said at least front main face is at least coated with:
      - a internal abrasion resistant coating with a pre-determined thickness.
      - a interferential coating comprising at least one LI layer and one HI layer with a predetermined number of layers,
   said optical article of reference having colorimetric parameters of reference, comprising at least a mean light reflection factor in the visible region of reference R_{v (ref)} above 5%, optionally a Chroma C*ref of reference and/or a hue of reference, href;
(b) designing a new optical article comprising at least the same substrate as the reference substrate, having a front main face and a rear main face,
   said at least front main face is at least coated with:
   - the same internal abrasion resistant coating with the same pre-determined thickness as the one of the optical article of reference,
   - an interferential coating comprising at least one LI layer and one HI layer with specific thicknesses calculated in the below step (c) optionally with a predetermined number of layers,
   - an external abrasion resistant coating with a pre-determined thickness and refraction index,
(c) calculating the specific physical thicknesses of said layers composing said interferential coating defined in (b), while targeting the colorimetric parameters of reference, so that, in the presence of the external abrasion resistant coating, the new optical article has:
   an Rv_{(predetermined front face OA)} that is identical or has a percent difference in absolute terms below 5% as compared with R_{v (ref),}.

Preferably, the specific physical thicknesses of said layers composing said interferential coating defined in (b) are calculated so that, in the presence of the external abrasion resistant coating, the new optical article has:
- a Chroma C* that is equal to or has a number difference in absolute terms below 10, preferably below 5 as compared with the reference Chroma C*; and/or
- a hue that is equal to or has a number difference in absolute terms below 10°, preferably below 5° as compared with the reference hue.

For instance, the "blue" examples 2-5 according to the invention were designed accordingly from the colorimetric parameters of Comparative example 1 as optical article of reference, i.e. Rv(ref)= 25.3%, C*(ref)=35.5 and h(15°)=222° ; six layers of alternating ZrO₂/SiO₂ layers, and considering an external hard coat of a refractive index n@550nm and thickness as indicated in the table 2.

The "green" examples 7 and 8 according to the invention were designed accordingly from the colorimetric parameters of Comparative example 6 as optical article of reference, i.e. Rv(ref)= 24.2%, C*(ref)=46 and h(15°)=113° ; ten layers of alternating ZrO₂/SiO₂ layers, and considering a an external hard coat of n@550nm = 1.4803 of a thickness of respectively 3500 nm and 2000 nm.

The invention hence relates to a method of designing an optical article (OA), implemented by a computer program comprising an optical article design software, the method comprising the following steps:
(a) selecting an initial optical article design including at least: a base element having a front main surface and a rear main surface, a front interferential coating deposited to the front main surface of the base element, said front interferential coating having a predetermined number of LI layer(s) and HI layer(s) of predetermined thicknesses, made respectively from predetermined materials,
   the front interferential coating being coated directly with an external abrasion resistant coating having a predetermined thickness and refraction index, so that the front interferential coating is positioned between the base element and said external abrasion-resistant coating;
(b) amending the physical thicknesses of said layers composing said front interferential coating and/or amending the refraction index and/or the thickness of the external abrasion resistant coating, to obtain a final optical article design having, on its front main face, a predetermined mean light reflection factor in the visible region, predetermined Rv_{(front face OA design)}, that is higher than or equal to 5 % for an angle of incidence of 15°final design .

Preferably, the step b) includes amending the physical thicknesses of said layers composing said front interferential coating to obtain a final optical article design having: a predetermined Chroma C*, and/or a predetermined hue.

In general, the predetermined Rv, the predetermined Chroma C*, and/or the predetermined hue of the final optical article design are respectively obtained from a mean light reflection factor of reference in the visible region Rv(ref), a Chroma of reference C*(ref) and a hue of reference h(ref) of an optical article of reference (OAR), said OAR, having a front main face and a rear main face and comprises :
- a same base element, having a front main surface and a rear main surface, which is identical to the base element of the final optical article design;
- a front interferential coating of reference that is deposited onto said front main surface of the base element,
- is free of any external abrasion-resistant coating,
said front interferential coating of reference having a same predetermined number of LI layer(s) and HI layer(s) and made respectively from the same predetermined materials as compared to the front interferential coating of the initial or final optical article design, and being such as:
- the predetermined Rv_{(front face OA design)} is identical or has a percent difference in absolute terms below 10% as compared with Rv (ref), and/orthe predetermined Chroma C* is equal to or has a number difference in absolute terms below 10, preferably below 5 as compared with the Chroma C*(ref); and/or
- the predetermined hue is equal to or has a number difference in absolute terms below 10°, preferably below 5° as compared with the hue of reference h(ref).

The « silver », « pink gold », « purple » and « orange » examples (9-11 and 13) were designed accordingly with an initial optical model including eight layers interferential stack of alternating ZrO₂/SiO₂, a 3500 nm external hard coat of n@550nm = 1.4803, targeting respectively Rv references of 28, 22, 7, 6 ; chroma references 5, 25, 75, 30 and hue references 320, 22, 300, and 5, and an external hard coating with characteristics as indicated in said table.

The free example 12 was designed accordingly with an initial optical model including a four layers interferential stack of alternating ZrO2/SiO2, a 3500 nm external hard coat of n@550nm = 1.4803, targeting a 5% Rv, with no specific chroma C* nor hue that were let free, leading to the corresponding calculated values indicated in the table 4.

Naturally, the various embodiments/characteristics described above for the optical article also apply to this method of of designing an optical article and will not be repeated below.

### D) The system for manufacturing an optical article

The invention also relates to a system for manufacturing an optical article (OA) comprising at least a front main face and a rear main face, said system comprising as constitutive components:
- at least one base element having at least a front main surface and a main rear surface, and
- at least one front interferential coating deposited to the front main surface of the base element, said front interferential coating comprising at least one layer having a low refractive index which is lower than 1.55, defined as "LI layer", and at least one layer having a high refractive index which is equal to or higher than 1.55, defined as "HI layer",
- an external abrasion-resistant coating coated directly onto said front interferential coating so that the front interferential coating is positioned between the base element and said external abrasion-resistant coating, said external abrasion-resistant coating having a predetermined physical thickness ranging from 1 µm to 5 µm;
the system comprising:
- a computer program comprising an optical design software adapted to:
   calculate the thicknesses of at least one LI layer and one HI layer of the front interferential coating, such as said optical article has, on its front main face, a mean light reflection factor in the visible region Rv _{(front face OA)} that is higher than or equal to 5 % for an angle of incidence of 15° taking into account the other constitutive components of the optical article;
- a coating unit to coat the base element and optionally one or several intermediate layers deposited to the front main surface and/or the rear main surface of the base element, such as a primer coating with an internal abrasion-resistant coating;
- a deposition unit for depositing onto the base element or, where appropriate, onto the one or several intermediate layers (pas inclus dans la rev, introduit par "such as..." cidessus)) the at least one LI layer and one HI layer of the front interferential coating in the thicknesses calculated by the optical design software,
- a coating unit for coating the front interferential coating with the external abrasion-resistant coating in the predetermined physical thickness.

Naturally, the various embodiments/characteristics described above for the optical article or for the method of designing also apply to this system for manufacturing an optical article and will not be repeated below.

### EXAMPLES

### A) Characterization

### A1- Heat-resistance test: determination of the critical temperature (T_{c})

The heat resistance test is performed one month after preparation of the lenses. The prepared lenses were put into an oven preheated to a selected temperature, and were left there for 1 hour. They were removed from the oven and visually evaluated by reflection in terms of the presence of cracks under a desk lamp. This experiment was performed at different temperatures, starting from 50 °C and raising the heating temperature in 10°C increments. The temperature was measured, at which the lenses could not withstand the heat treatment and were cracked after 1 hour. This temperature is given as the critical temperature in the tables below. When several lenses have been tested, the critical temperature mentioned is the average value.

### A2- Day driving "the visual transmission factor T"

The visual transmission factor Tv was measured expressed in% when an ophthalmic lens is illuminated under standard measurement conditions defined in standard ISO 8980-3.

### A3- Iron straw test (PDF test)

The resistance to scratches by the iron straw test (PDF test) consists in abrading the treated convex face of the glass with a steel wool in the direction of the fibers by carrying out 5 to-and-fro movements, over an amplitude of 4 to 5 cm while applying a constant force to the steel wool (5 kg during the outward movement, 2.5 kg during the return). The glasses are then inspected visually. A score is assigned as a function of the following graduation
0 :No scratch observed
1: very slightly scratched glass (1 to 5 scratches)
2: slightly scratched glass (6 to 20 scratches)
3: fairly scratched glass (21 to 50 scratches)
4: very scratched glass (number of scratches greater than 50)
5: bare substrate (ORMA^{®} made of CR39^{®}).

### A4- Tumble test

The lenses are first subjected to a tumble test in a cylinder containing many types of abrasive and scratch producing materials and the cylinder rotates for about 20 minutes to produce scratches and nicks on the coated lenses. The lenses are then soaked in isopropanol for thirty minutes and examined over a grid for evidence of worms or blisters and are given a ratio. The ratio equals the number of times more scratch resistant the sample lens is when compared to an uncoated CR-39 (standard) lens. The ration is created by dividing the "Test Lens" average delta into the "standard lens" average delta.

The higher the tumble test ratio, the stronger the abrasion resistance is.

### A5- Optical and colorimetric properties

Colorimetric measurements (in reflection) of the face coated with the exemplified interferential coating (front face): reflection factors Rv, hue angle h, a*, b* and chroma C* in the international colorimetric CIE (L*, a*, b*) space were carried out with a spectrophotometer, taking into account the standard illuminant D65, and the standard observer 10° (for h and C*). They are provided for an angle of incidence of 15°.

### B) General procedures

The optical articles, especially lenses 1 to 6, employed respectively in the examples 1 to 6 comprise a 70 mm-diameter Polycarbonate^{®} lens substrate (obtained by injection of polycarbonate, refractive index = 1.593), with a power of +0.00D or -2.00D diopters. The substrate Polycarbonate^{®} is commercially available for example from GENERAL ELECTRIC COMPANY under the trade name LEXAN^{®}, from TEIJIN under the trade name PANLITE^{®}, from BAYER under the trade name BAYBLEND^{®}, from MOBAY CHEMICHAL Corp. under the trade name MAKROLON^{®}, or from DOW CHEMICAL Co. under the trade name CALIBRE^{®}. The rear main face (concave face) of each exemplified substrate can be tinted thanks to a sublimation process such as the one disclosed in the document EP1249334, with a combination of the pigments Yellow, Red and Blue resulting into a grey color.

According to the figure 3, all the exemplified substrates 301 were then washed (caustic bath) and coated respectively on their convex face (front face) and on their concave face (rear face) by dip i.e., simultaneously with a front and rear internal abrasion-resistant coatings (hard coat, named hereafter **HC2**) (optionally via a front 303 and rear 302 internal primer coatings). This product was cured 3 hours at 100°C and then maintained at 60°C. The physical thickness of this abrasion-resistant coating is of 4.5 µm

The front main face (convex face) of lenses Comp 1, Comp 6 according to the invention were then successively coated with an interferential coating and an anti-fouling layer.

The front main face (convex face) of lenses 2, 3, 4, 5, 7, 8 according to the invention was then coated with an interferential coating 305, whereas the rear internal abrasion-resistant coating 304 was coated with an optional thin layer SiO₂ 307 the purpose of which being detailed later (< 10nm). Then, both front main face (convex face) and rear main face (concave face) are activated with a plasma treatment (Radio-Frequence plasma), washed to avoid dusts. The activated front interferential coating is then coated with an external abrasion-resistant coating (named hereafter **HC1**). When this external abrasion resistant coating HC1 is applied by dip i.e. a technique simultaneously coating the front and rear faces of an object, the thin layer SiO₂ 307 is present and is also coated by the material 306 of the external abrasion resistant coating HC1.The thin layer 307 allows to promote the adhesion between the rear internal abrasion resistant coating 303 and the material 306 of the external abrasion-resistant coating at the rear side of the object. On the contrary, when the external abrasion resistant coating HC1 is applied only on the front face of the object, no layer of material of the external abrasion-resistant coating is located at the rear side of the object, and the presence of the thin layer 307 is unnecessary. In this case, the last rear layer of the object is constituted by the rear internal abrasion resistance coating 304.

In any case, the HC1 layer is cured 3 hours at 100°C. No primer coating is present between the interferential coating and the external abrasion resistance coating HC1.

### HC1

The external abrasion-coating (**HC1**) for all the exemplified lenses is formed from commercial sol-gel abrasion- resistant coating compositions mainly containing organopolysiloxanes, silica colloids or titanium dioxide colloids, methanol and/or 1 -methoxy-2-propanol, HC1 (Examples 2, 3, 7, 8)

More precisely, said external abrasion-coating HC1 is prepared as follows:
80.5 parts of 0.1 N hydrochloric acid are dropped dropwise into a solution containing 224 parts of GLYMO and 120 parts of DMDES.

The hydrolyzed solution is stirred for 24 hours at room temperature and then 718 parts of colloidal silica at 30% in methanol, 15 parts of aluminum acetylacetonate and 44 parts of ethylcellosolve are added.

A small amount of surfactant is added.

The EST of the composition contains about 13% solid matter from the hydrolyzed DMDES.

The refractive index of HC1 at 550 nm is 1.48037, i.e. below 1.55 and is therefore considered as a low refractive index.

HC1a is another commercially available hard coat of low refractive index of 1.48037 at 550 nm.

HC1b is yet another commercially available hard coat of high refractive index of 1.48037 at 550 nm

### HC2, HC3

The internal abrasion resistance coating and the rear abrasion resistance coating can be chosen among the same materials described above for the external abrasion resistance coating, and can be identical or different than the specific one chosen as the material of the external abrasion resistance coating HC1.

### Primer coating

The primer coating possibly interposed between the substrate and the internal abrasion resistance coating HC2 or between the substrate and the rear abrasion resistance coating HC3, can be any impact-resistant primer, such as the ones cited in US10222511, optionally filled with particulate silica such as the one disclosed in US20140106163.

For example, it can comprise a polyurethane type impact-resistant primer such as the one based on Witcobond^{®} 234 optionally filled.

### Mirror

The various layers of all the exemplified interferential coatings were deposited without heating the substrates, by vacuum evaporation, optionally assisted (IAD) during the deposition by a beam of oxygen and possibly argon ions, when specified (evaporation source: electron gun), and optionally under pressure regulation by supplying (passive) O₂ gas into the chamber, where indicated.

The vacuum evaporation device that made it possible to deposit the various interferential layers was a **Leybold LAB1100+** vacuum coater having two systems for evaporating materials, an electron gun evaporation system and a thermal evaporator (Joule-effect evaporation system), and a **KRI EH 1000 F ion gun** (from Kaufman & Robinson Inc.), for use in the preliminary phase of preparation of the surface of the substrate by argon ion bombardment (IPC) and in the ion-assisted deposition (IAD) of the layers.

### C) Preparation of lenses 2, 3, 4, 5, 7, 8, Comp 1 and Comp 6

The tinted lenses 2, 3, 4, 5, 7, 8 and as well as Comp 1 and Comp 6 were placed on a carrousel provided with circular openings intended to accommodate the lenses to be treated, the convex side facing the evaporation sources and the ion gun.

The method for producing optical articles comprises introducing the lens substrate provided with the primer coating and the internal abrasion-resistant coating, **HC2** on both rear and front main faces, into a vacuum deposition chamber, conducting a pumping step until a high vacuum was created, followed by an ion gun conditioning step (IGC, such as disclosed in FR 2957454, 3.5×10⁻⁵ mBar as starting pressure, 140 V, 3.5 A, argon, 60 seconds), a substrate surface activation step using a bombardment with an argon ion beam (IPC) with an average pressure of 1.8×10⁻⁴ mBar (the ion gun was set to an anode current discharge of 1.7 A, 110 V, 60 seconds, gas flow: 10 sccm of argon), stopping the ionic irradiation, and then successively evaporating the required number of layers (interferential coating layers) at a rate ranging from 2 to 3 nm/s (0.4 nm/s for the antifouling coating), and lastly a ventilation step.

The deposition conditions of the layers of the interferential coating were standard ones, for example as follows:
- an alternation of a deposition step of the HI layer (ZrO₂) under a pressure of 6.10⁻⁵ mBar and a deposition step of the LI layer (SiO₂) under a pressure of 2.4×10⁻⁵ mBar (each HI layer and each LI layer have been deposited by using these conditions),
- All the layers were deposited without adding gas in the vacuum chamber during deposition.

Then, the concave sides were placed on a carrousel provided with circular openings intended to accommodate the lenses to be treated, the concave side facing the evaporation sources and the ion gun to deposit a thin LI layer (SiO₂) (< 10nm) and lastly a ventilation step.

Then, lenses 2, 3, 4, 5, 7, 8 are removed from the carousel. and both convex and concave faces were activated with a plasma RF Oxygen 390 W during 30 seconds and were washed to avoid dusts.

Finally, the outermost or external abrasion-resistant coating HC1 according to the invention was coated onto the concave main face and where appropriate also the convex main face by dip process and was cured 3 hours at 100°C so as to get a physical thickness of 2 µm or 3.5 µm.

Comparative lenses 1 and 6 are prepared in the same manner and according to the structure illustrated in the table below. These comparative lenses do not comprise the external abrasion-resistant coating according to the invention. This layer is replaced by an outermost antifouling layer such as disclosed in the experimental section of patent application WO 2010/109154, obtained by evaporation under vacuum of the Optool DSX^{®} compound marketed by Daikin Industries (thickness: from 2 to 5 nm) directly coated after the interferential coating into the vacuum deposition chamber).

### D) Experiments and results

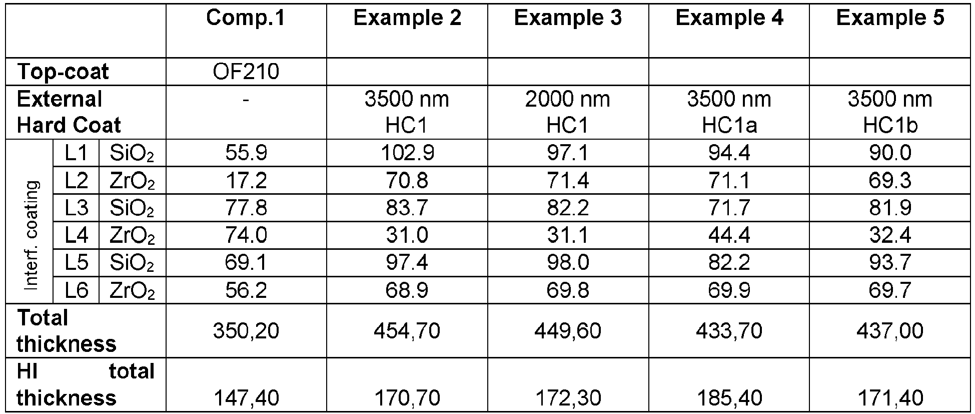

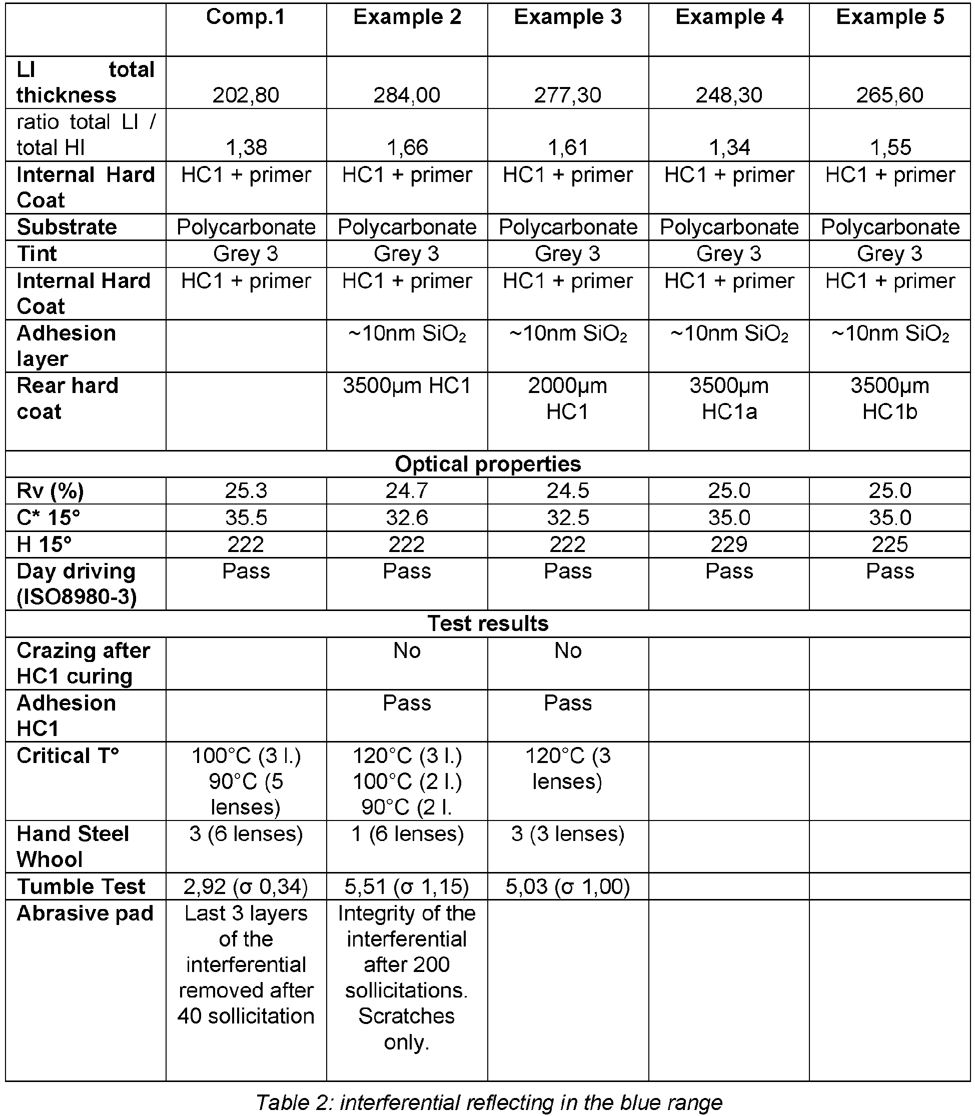

As it is shown in these examples 2, 3, 4, 5 as compared with Comp.1 (corresponding to a targeted lens), the optical and colorimetric characteristics of the lenses 2, 3, 4, 5 according to the invention are identical to the targeted ones. In fact, the Applicant has amended the thicknesses of the interferential coating of lenses 2, 3, 4, 5 so as to take into account the HC1 layer's optical properties.
Example 2; HC1 = 3,5µm of HC1 n_{@550nm} = 1.48037
Example 3; HC1 = 2µm of HC1 n_{@550nm} = 1.48037
Example 4; HC1a = 3,5µm of n_{@550nm} = 1.48800 hard-coat (low index)
Example 5; HC1b = 3,5µm of n_{@550nm} = 1.58509 hard-coat (high index)

In addition, the addition of this outermost abrasion-resistant coating HC1 enables to improve the abrasion and scratch resistance of the lenses, especially both fine" scratches and "large" scratches.

The abrasion Hand Steel Wool gives also excellent results for Lens 2 according to the invention (better than the one of Comp.1).

Lenses 2 and 3according to the invention are also statically better than Comp.1 for the Abrasion Tumble Test.

Finally, the abrasive pad in the bleaching test (200 mechanical loads) only generates scratches with no change of the interferential color on the Lenses 2 and 3according to the invention, contrary to Comp.1 Lens where a delamination of the uppermost layers of the interferential and scratches are observed.

In addition, the addition of this outermost abrasion-resistant coating HC1 enables to improve the heat resistance of the lens. Critical temperature for lenses 2 and 3 is at least 110°C higher than the one of the targeted Comp. Lens 1 that does not comprise the claimed uppermost abrasion-resistant coating HC1.

The optical articles having the specific stack according to the invention exhibit an excellent abrasion resistance, and both excellent optical and colorimetric characteristics.

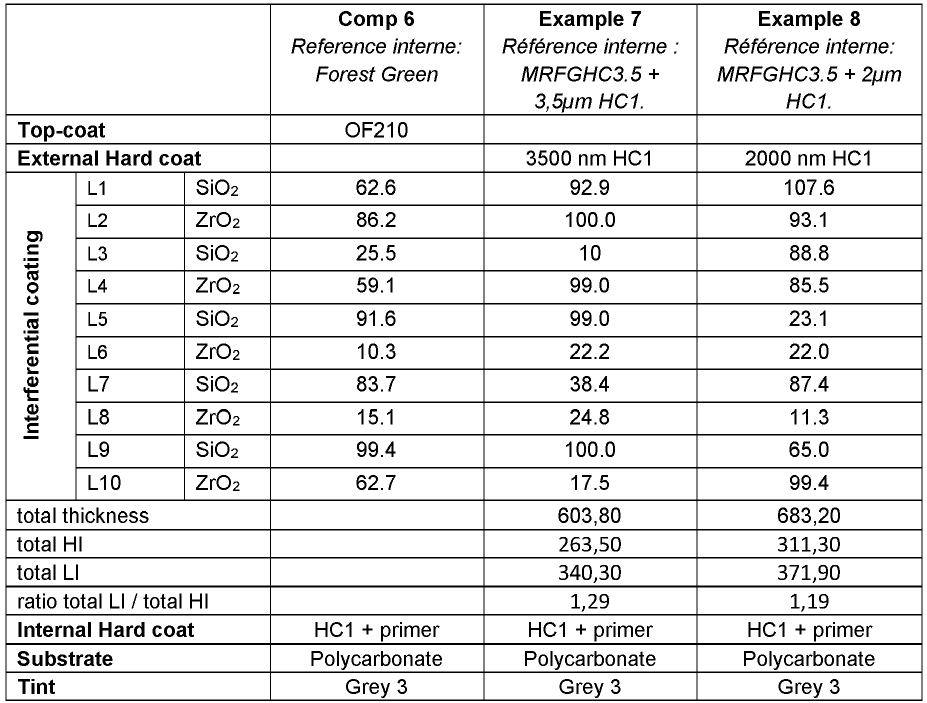

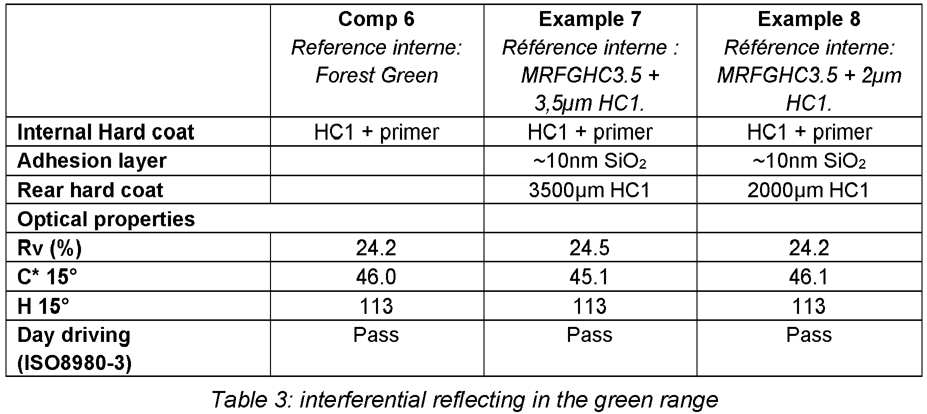

As it is shown in these examples 7, 8 as compared with Comp.6 (corresponding to a targeted lens),
the optical and colorimetric characteristics of the lenses 7, 8 according to the invention are identical to the targeted ones. In fact, the Applicant has amended the thicknesses of the interferential coating of lenses 7, 8 so as to take into account the HC1 layer's optical properties.
Example 7; HC1 = 3,5 µm of HC1 n_{@550nm} = 1.48037
Example 8; HC1 = 2 µm of HC1 n_{@550nm} = 1.48037
Example 9, 10, 11, 12; HC1 = 3,5 µm of HC1 n@550nm = 1.48037
Example 13 HC1 = 1 µm of HC1 n@550nm = 1.4803

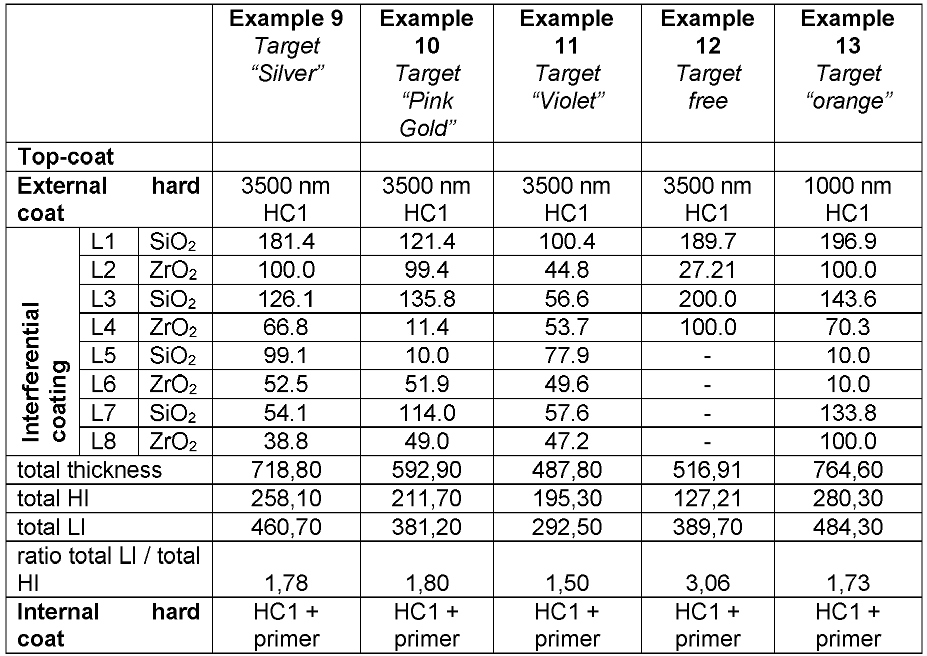

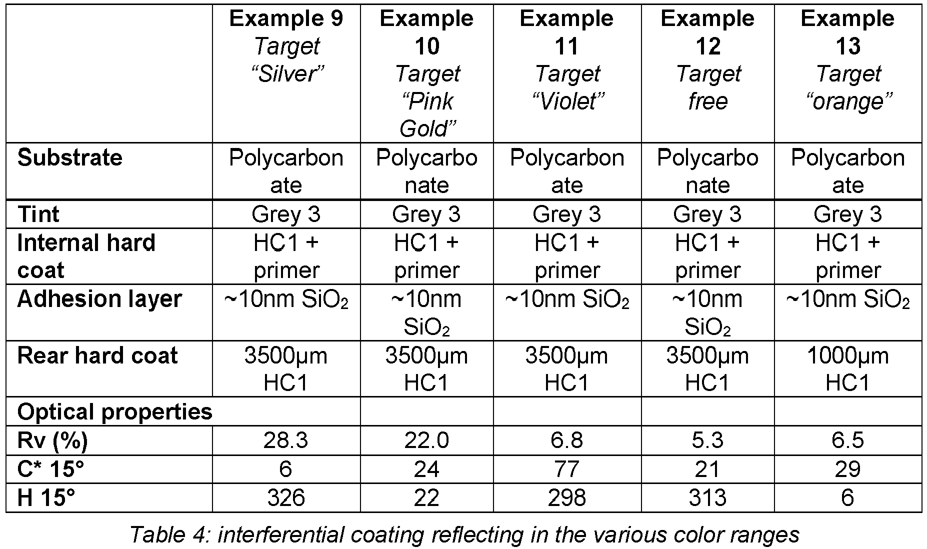

## Claims

1. An optical article (OA) having a front main face and a rear main face, comprising at least:
- one base element having a front main surface and a rear main surface;
- at least one front interferential coating deposited to the front main surface of the base element, said front interferential coating comprising at least one layer having a low refractive index which is lower than 1.55, defined as "LI layer", and at least one layer having a high refractive index which is equal to or higher than 1.55, defined as "HI layer",
**characterized in that** an external abrasion-resistant coating is coated directly onto said front interferential coating so that the front interferential coating is positioned between the base element and the external abrasion-resistant coating, said external abrasion-resistant coating having a physical thickness ranging from 1 µm to 5 µm; and
wherein the optical article has, on its front main face, a mean light reflection factor in the visible region Rv _{(front face OA)} that is higher than or equal to 5 % for an angle of incidence of 15°.

2. The optical article according to claim 1, wherein said external abrasion-resistant coating has a physical thickness ranging from 1 µm to 4 µm, in particular ranging from 1 µm to 3 µm and typically ranging from 2 µm to 3.5 µm.

3. The optical article according to claim 1 or 2, wherein said external abrasion-resistant coating is the outermost layer of the optical article or is located underneath an antifouling coating which is the outermost layer of the optical article.

4. The optical article according to anyone of the preceding claims, wherein an internal abrasion-resistant coating is comprised between the base element and said interferential coating and has a physical thickness ranging from 1 µm to 5 µm, in particular ranging from 1 µm to 3 µm and typically ranging from 3 µm to 4 µm, optionally a primer coating being comprised between the internal abrasion-resistant coating and the base element and having a physical thickness ranging from 0.8 to 1.2 µm.

5. The optical article according to anyone of the preceding claims, wherein said external abrasion-resistant coating and/or said internal abrasion-resistant coating is formed from a curable composition comprising (A) at least one binder comprising at least one epoxysilane having at least two hydrolysable groups directly linked to the Si atom of the epoxysilane, and/or its hydrolysis product and (B) optionally at least colloidal particles.

6. The optical article according to claim 5, wherein (A) said epoxysilane has the following formula:
RnYmSi(X)4-n-m (I)
wherein
R groups, identical or different, are monovalent organic groups linked to the Si atom by a carbon atom and comprising at least one, preferably one epoxy function ;
X groups, identical or different, are hydrolyzable groups ;
Y is a monovalent organic group linked to the Si atom by a carbon atom, n and m being integers such as n = 1 or 2 and n+m = 1 or 2,
and preferably said epoxysilane is chosen in the group consisting of γ-glycidoxypropyl triethoxysilane, γ-glycidoxypropyl trimethoxysilane, 2-(3,4-époxycyclohexyl) ethyltrimethoxysilane and 2-(3,4-epoxycyclohexyl) ethyltriethoxysilane or a mixture of two or more thereof.

7. The optical article according to claim 5 or 6, wherein the at least colloidal particles is silicon oxide, aluminum oxide, zirconium oxide or a mixture of two or more thereof, and has preferably a size of less than or equal to 150 nm, preferably from 2 nm to 50 nm.

8. The optical article according to anyone of the preceding claims 4 to 7, wherein the rear main surface of the base element is coated successively with an internal abrasion-resistant coating, optionally an antireflective coating, and an antifouling coating.

9. The optical article according to anyone of the preceding claims, having a critical temperature that is greater than or equal to 80 °C, more preferably greater than or equal to 85 °C and most preferably greater than or equal to 90 °C.

10. The optical article according to anyone of the preceding claims, wherein the front interferential coating has the same number of LI layer(s) and HI layer(s) and is made of the same materials as a front interferential coating of reference of an optical article of reference (OAR),
the OAR, having a front main face and a rear main face, comprising :
- a base element, having a front main surface and a rear main surface, which is identical to the base element of the OA;
- the front interferential coating of reference that is deposited onto the front main surface of the base element,
- the OAR is free of any external abrasion-resistant coating and has, on its front main face, a mean light reflection factor of reference in the visible region Rv(ref) that is higher than or equal to 5 % for an angle of incidence of 15°, a Chroma of reference C*(ref) and a hue of reference h(ref):
- the Rv_{(front faceOA)} of said optical article is predetermined and is identical or has a percent difference in absolute terms below 10% as compared with the Rv(ref) of the OAR, and/or
- said optical article has a predetermined Chroma C* that is equal to or has a number difference in absolute terms below 10, preferably below 5 as compared with the Chroma C*(ref) of the OAR, and/or
- said optical article has a predetermined hue, h, that is equal to or has a number difference in absolute terms below 10°, preferably below 5° as compared with said h(ref) of OAR.

11. The optical article according to anyone of the preceding claims, wherein the optical article is an ophthalmic lens, preferably sunglasses.

12. A method of designing an optical article (OA), implemented by a computer program comprising an optical article design software, the method comprising the following steps:
(a) selecting an initial optical article design including at least: a base element having a front main surface and a rear main surface, a front interferential coating deposited to the front main surface of the base element, said front interferential coating having a predetermined number of LI layer(s) and HI layer(s) of predetermined thicknesses, made respectively from predetermined materials,
the front interferential coating being coated directly with an external abrasion resistant coating having a predetermined thickness and refraction index, so that the front interferential coating is positioned between the base element and said external abrasion-resistant coating;
(b) amending the physical thicknesses of said layers composing said front interferential coating and/or amending the refraction index of the external abrasion resistant coating and/or amending the thickness of the external abrasion resistant coating, to obtain a final optical article design having, on its front main face, a predetermined mean light reflection factor in the visible region, predetermined Rv_{(front face OA design)}, that is higher than or equal to 5 % for an angle of incidence of 15°final design.

13. Method according to the precedent claim, wherein the step b) includes amending the physical thicknesses of said layers composing said front interferential coating to obtain a final optical article design having: a predetermined Chroma C*, and/or a predetermined hue.

14. Method according to the claim 13, wherein the predetermined Rv_{(front face OA design)}, the predetermined Chroma C*, and/or the predetermined hue of the final optical article design are respectively obtained from a mean light reflection factor of reference in the visible region Rv(ref), a Chroma of reference C*(ref) and a hue of reference h(ref) of an optical article of reference (OAR), said OAR, having a front main face and a rear main face and comprises:
- a same base element, having a front main surface and a rear main surface, which is identical to the base element of the final optical article design;
- a front interferential coating of reference that is deposited onto said front main surface of the base element,
- is free of any external abrasion-resistant coating,
said front interferential coating of reference having a same predetermined number of LI layer(s) and HI layer(s) and made respectively from the same predetermined materials as compared to the front interferential coating of the initial or final optical article design, and being such as:
- the predetermined Rv_{(front face OA design)} is identical or has a percent difference in absolute terms below 10% as compared with Rv (ref), and/or the predetermined Chroma C* is equal to or has a number difference in absolute terms below 10, preferably below 5 as compared with the Chroma C*(ref); and/or
- the predetermined hue is equal to or has a number difference in absolute terms below 10°, preferably below 5° as compared with the hue of reference h(ref).

15. System for manufacturing an optical article (OA) comprising at least a front main face and a rear main face, said system comprising as constitutive components:
- at least one base element having at least a front main surface and a main rear surface, and
- at least one front interferential coating deposited to the front main surface of the base element, said front interferential coating comprising at least one layer having a low refractive index which is lower than 1.55, defined as "LI layer", and at least one layer having a high refractive index which is equal to or higher than 1.55, defined as "HI layer",
- an external abrasion-resistant coating coated directly onto said front interferential coating so that the front interferential coating is positioned between the base element and said external abrasion-resistant coating, said external abrasion-resistant coating having a predetermined physical thickness ranging from 1 µm to 5 µm;
the system comprising:
- a computer program comprising an optical design software adapted to and/or configured to calculate the thicknesses of at least one LI layer and one HI layer of the front interferential coating, such as said optical article has, on its front main face, a mean light reflection factor in the visible region Rv _{(front face OA)} that is higher than or equal to 5 % for an angle of incidence of 15° taking into account the other constitutive components of the optical article;
- a coating unit to coat the base element and optionally one or several intermediate layers deposited to the front main surface and/or the rear main surface of the base element, such as a primer coating with an internal abrasion-resistant coating;
- a deposition unit for depositing onto the base element or, where appropriate, onto the one or several intermediate layers, the at least one LI layer and one HI layer of the front interferential coating in the thicknesses calculated by the optical design software,
- a coating unit for coating the front interferential coating with the external abrasion-resistant coating in the predetermined physical thickness.
